# EUROPEAN PATENT APPLICATION

(11) **EP 4 102 233 A1**
(43) Date of publication of application: **14.12.2022**
(21) Application number: 20917374.9
(22) Date of filing: 06.11.2020
(51) Int. Cl.: G01N 35/10

(54) **AUTOMATIC ANALYSIS SYSTEM, CONTROL DEVICE, AND CLEANING METHOD**

(30) Priority: 07.02.2020 JP 2020020184
(71) Applicant: Hitachi High-Tech Corporation, Minato-ku Tokyo 105-6409 (JP)
(72) Inventor: MORI Takamichi, Tokyo 105-6409 (JP); KAMEYAMA Hiroki, Tokyo 105-6409 (JP); ITO Takumi, Tokyo 105-6409 (JP); TAKAHASHI Kenichi, Tokyo 105-6409 (JP); OOTAKI Tomotada, Tokyo 105-6409 (JP)
(74) Representative: Strehl Schübel-Hopf & Partner
(86) International application number: PCT/JP2020/041606
(87) International publication number: WO 2021/157149

(57) **Abstract**

To obtain a highly reliable measurement result, this invention is characterized by comprising: an automated analyzer (100) having a sample probe (122) for drawing in and discharging a sample and a sample probe cleaning unit (110) having a sample dispensing unit (121) for at least moving the sample probe (122) from the position of a sample container (152) in which the sample is accommodated to the position of a reaction container (131) into which the sample is to be dispensed, and being configured to carry out first cleaning in which cleaning water is discharged around the sample probe (122) between the drawing in of the sample from the sample container (152) and the discharging of the sample into the reaction container (131); and a controller (200) for controlling the discharging and stopping of the cleaning water in the first cleaning for a prescribed inspection item.

## Description

### Technical Field

The present invention relates to techniques of an automatic analysis system, a control device, and a cleaning method of performing spectroscopic measurement of a sample.

### Background Art

In a blood inspection, a urine inspection, or the like, after a sample probe to which a sample is dispensed is cleaned, a certain amount of the sample probe is inserted into the sample after the cleaning. Then, the sample probe aspirates the sample and ejects the aspirated sample to a reaction vessel. Thereafter, a reagent is ejected to the reaction vessel to which the sample is ejected, and stirring is performed. Then, a method of measuring absorbance of the sample after the stirring is generally performed.

PTL 1 discloses an automatic analysis system and an inspection system (see Claim 1), in which "in an automatic analysis device configured to analyze a predetermined inspection item by dispensing an upper layer sample from a sample container accommodating a sample separated into an upper layer and a lower layer by inspection sample separation processing and measuring a mixed solution of the upper layer sample and a reagent, the automatic analysis device includes: a dispensing probe configured to perform dispensing by aspirating the upper layer sample in the sample container from a lower end and ejecting the upper layer sample into a reaction vessel; a detector configured to detect contact between the upper layer sample in the sample container and the lower end of the dispensing probe; an acquisition unit configured to acquire an analysis value of a predetermined component included in the inspection sample before being separated into the upper layer and the lower layer and affecting an inspection item to be inspected using the upper layer sample; and a drive control unit configured to lower the dispensing probe into the sample container and stop the lower end of the dispensing probe at at least two different positions in the upper layer sample based on the analysis value and a detection signal detected by the detector. The drive control unit stops, when the analysis value is equal to or less than a preset upper limit value, the dispensing probe at a first aspiration position, where the lower end of the dispensing probe is located in the upper layer sample and below a position where the lower end of the dispensing probe is in contact with the upper layer sample by a first distance, and stops, when the analysis value exceeds the upper limit value, the dispensing probe at a second aspiration position, where the lower end of the dispensing probe is located in the upper layer sample and further below the first aspiration position."

### Citation List

### Patent Literature

PTL 1: Japanese Patent No. 5931540 specification

### Summary of Invention

### Technical Problem

In the case of a blood inspection, a sample (plasma, serum, and the like) measured by an automatic analysis system is centrifuged after blood collection by a vacuum blood collection tube, and serum and plasma of the sample after centrifugation are analyzed. Here, it has been found that the sample after the centrifugation contains a component (hereinafter, referred to as an unstable component) whose measurement result is unstable only for a specific item. It has also been found that such an unstable component is present in the vicinity of supernatant of the sample after the centrifugation.

As described in PTL 1, when an insertion amount of the sample probe into the sample is increased at the time of sample aspiration, the unstable component present in the vicinity of the supernatant is not aspirated into the sample probe. However, when the sample probe is pulled out from the sample after the sample aspiration, the unstable component inevitably adheres to a side surface of the sample probe. When the unstable component adheres to the side surface of the sample probe, the sample is ejected so as to go around the side surface of the sample probe when the sample is ejected to the reaction vessel. For this reason, the unstable component is mixed into the ejected sample (details will be described later). Accordingly, a stable measurement result may not be obtained.

The invention has been made in view of such a background, and an object of the invention is to obtain a highly reliable measurement result.

### Solution to Problem

In order to solve the above problem, the invention includes: an automatic analysis unit including a probe unit configured to perform aspiration and ejection of a sample, a probe moving unit configured to move the probe unit at least from a position of a sample container in which the sample is stored to a position of a reaction vessel into which the sample is dispensed, and a cleaning unit configured to perform first cleaning in which a cleaning liquid is ejected to a periphery of the probe unit between the aspiration of the sample from the sample container and the ejection of the sample to the reaction vessel; and a control unit configured to control ejection and stop of the cleaning liquid in the first cleaning in a predetermined inspection item.

Other solutions will be appropriately described in the embodiments.

### Advantageous Effects of Invention

According to the invention, a highly reliable measurement result can be obtained.

### Brief Description of Drawings

[FIG. 1] FIG. 1 is a configuration diagram of an automatic analysis system according to a first embodiment.
[FIG. 2A] FIG. 2A is a diagram showing a top view of a sample probe cleaning unit (part 1).
[FIG. 2B] FIG. 2B is a perspective view of the sample probe cleaning unit (part 1).
[FIG. 2C] FIG. 2C is a cross-sectional view of the sample probe cleaning unit (part 1).
[FIG. 3A] FIG. 3A is a diagram showing a top view of a sample probe cleaning unit (part 2).
[FIG. 3B] FIG. 3B is a perspective view of the sample probe cleaning unit (part 2).
[FIG. 3C] FIG. 3C is a cross-sectional view of the sample probe cleaning unit (part 2).
[FIG. 4A] FIG. 4A is a diagram showing a problem of a method so far (part 1).
[FIG. 4B] FIG. 4B is a diagram showing the problem of the method so far (part 2).
[FIG. 4C] FIG. 4C is a diagram showing the problem of the method so far (part 3).
[FIG. 4D] FIG. 4D is a diagram showing the problem of the method so far (part 4).
[FIG. 4E] FIG. 4E is a diagram showing the problem of the method so far (part 5).
[FIG. 4F] FIG. 4F is a diagram showing the problem of the method so far (part 6).
[FIG. 5A] FIG. 5A is a diagram illustrating a method of intermediate cleaning in the present embodiment (part 1) .
[FIG. 5B] FIG. 5B is a diagram illustrating the method of the intermediate cleaning in the present embodiment (part 2) .
[FIG. 5C] FIG. 5C is a diagram illustrating the method of the intermediate cleaning in the present embodiment (part 3) .
[FIG. 5D] FIG. 5D is a diagram illustrating the method of the intermediate cleaning in the present embodiment (part 4) .
[FIG. 5E] FIG. 5E is a diagram illustrating the method of the intermediate cleaning in the present embodiment (part 5) .
[FIG. 5F] FIG. 5F is a diagram illustrating the method of the intermediate cleaning in the present embodiment (part 6) .
[FIG. 5G] FIG. 5G is a diagram illustrating the method of the intermediate cleaning in the present embodiment (part 7) .
[FIG. 5H] FIG. 5H is a diagram illustrating the method of the intermediate cleaning in the present embodiment (part 8) .
[FIG. 6] FIG. 6 is a timing chart of second cleaning.
[FIG. 7] FIG. 7 is a timing chart showing first cleaning according to the first embodiment.
[FIG. 8] FIG. 8 is a diagram showing a temporal change in a rotation speed of a sample probe in the first cleaning according to the first embodiment.
[FIG. 9] FIG. 9 is a timing chart showing first cleaning according to a second embodiment.
[FIG. 10] FIG. 10 is a diagram showing a temporal change in a rotation speed of a sample probe in the first cleaning according to the second embodiment.
[FIG. 11] FIG. 11 is a timing chart showing first cleaning according to a third embodiment.
[FIG. 12] FIG. 12 is a diagram showing a temporal change in a rotation speed of a sample probe in the first cleaning according to the third embodiment.
[FIG. 13] FIG. 13 is a timing chart showing first cleaning according to a fourth embodiment.
[FIG. 14A] FIG. 14A is a diagram showing a method of dividing into two cycles.
[FIG. 14B] FIG. 14B is a timing chart showing first cleaning in the two cycles.
[FIG. 15A] FIG. 15A is a diagram showing a method of dividing into three cycles.
[FIG. 15B] FIG. 15B is a timing chart showing first cleaning in the three cycles.
[FIG. 16] FIG. 16 is a functional block diagram of a controller according to the present embodiment.
[FIG. 17] FIG. 17 is a diagram showing a hardware configuration of the controller according to the present embodiment.
[FIG. 18] FIG. 18 is a flowchart showing a procedure of switching processing between first cleaning and second cleaning.
[FIG. 19] FIG. 19 is a diagram showing an example of operation registration data according to a sixth embodiment.
[FIG. 20A] FIG. 20A is a diagram showing an example of operation order list data according to the sixth embodiment (part 1).
[FIG. 20B] FIG. 20B is a diagram showing an example of the operation order list data according to the sixth embodiment (part 2).
[FIG. 20C] FIG. 20C is a diagram showing an example of the operation order list data according to the sixth embodiment (part 3).

### Description of Embodiments

Next, modes for carrying out the invention (referred to as "embodiments") will be described in detail with reference to the drawings as appropriate.

### [First Embodiment]

### <System Configuration>

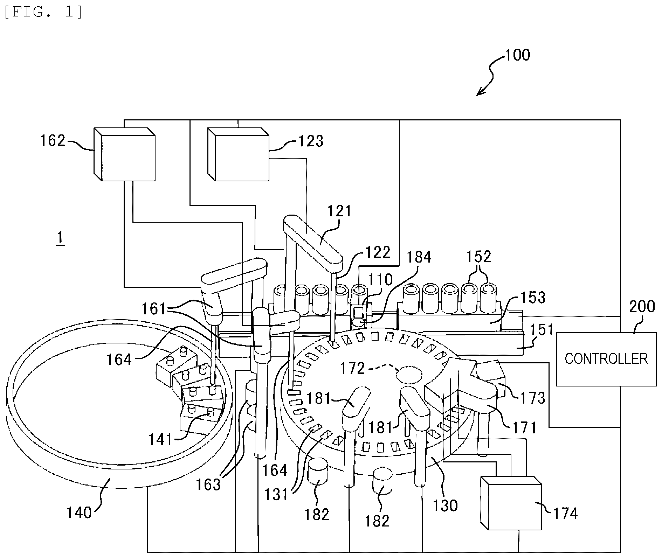

FIG. 1 is a configuration diagram of an automatic analysis system 1 according to a first embodiment.

The automatic analysis system 1 shown in FIG. 1 includes an automatic analysis device 100 and a controller 200.

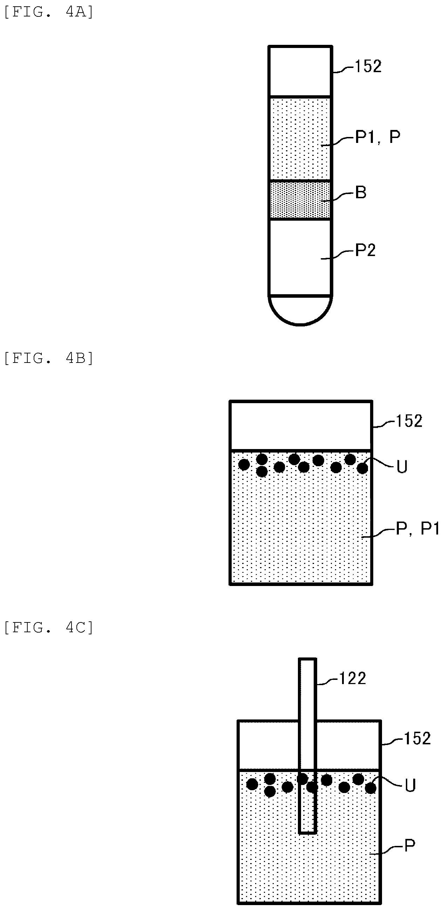

In the automatic analysis device 100, each of a sample P (see FIG. 4A and the like) and a reagent is dispensed into a plurality of reaction vessels 131. Then, the sample P dispensed into the reaction vessels 131 reacts with the reagent. The reacted sample P and the reagent are referred to as a reaction liquid. The automatic analysis system 1 is a device for measuring the reaction liquid, and includes a reaction disk 130, a reagent disk 140, a sample transport unit 151, a reagent dispensing unit 161, a reagent syringe 162, and a sample dispensing unit 121. The automatic analysis system 1 includes a sample syringe 123, a reaction vessel cleaning unit 171, a light source 172, a spectrophotometer 173, a stirring unit 181, a cleaning pump 174, a sample probe cleaning unit 110, and cleaning tanks 163 and 182. The automatic analysis system 1 according to the present embodiment is characterized by the sample dispensing unit 121 and the sample probe cleaning unit 110.

The reaction vessels 131 are disposed on a circumference of the reaction disk 130. The sample transport unit 151 that moves a rack 153 on which sample containers 152 are placed is disposed in the vicinity of the reaction disk 130. The sample P (plasma and serum P1 (see FIG. 4A) in the present embodiment) is dispensed into the sample containers 152.

The sample dispensing unit 121 capable of rotating and moving a sample probe 122 in an up-down direction is disposed between the reaction disk 130 and the sample transport unit 151. The sample syringe 123 is connected to the sample probe 122. When the sample syringe 123 is driven, the sample probe 122 aspirates and ejects the sample P.

When the sample probe 122 aspirates the sample P from the sample container 152, the sample probe 122 is moved upward by the sample dispensing unit 121, and then moves to a position of the reaction vessel 131 while drawing an arc around a rotation axis. When the sample probe 122 moves to the position of the reaction vessel 131, the sample probe 122 is lowered by the sample dispensing unit 121, and the sample P is dispensed into the reaction vessel 131.

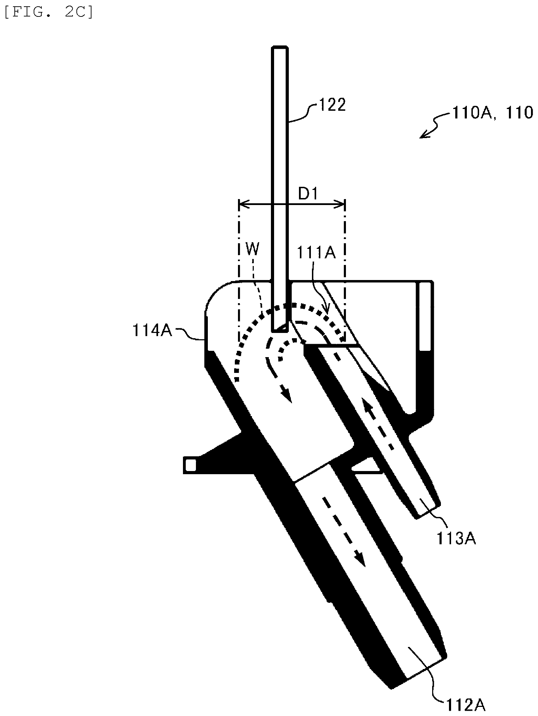

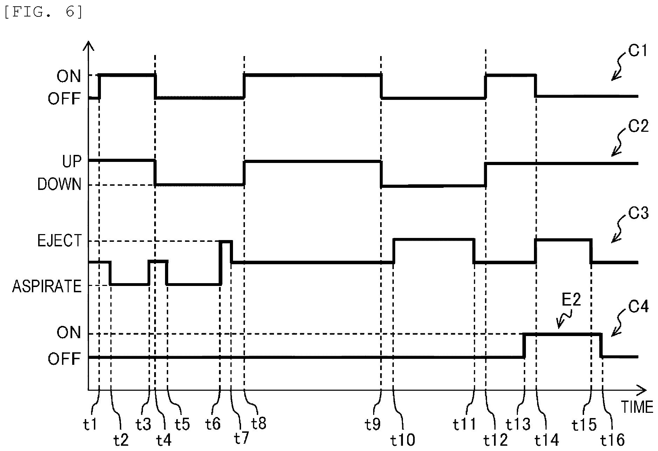

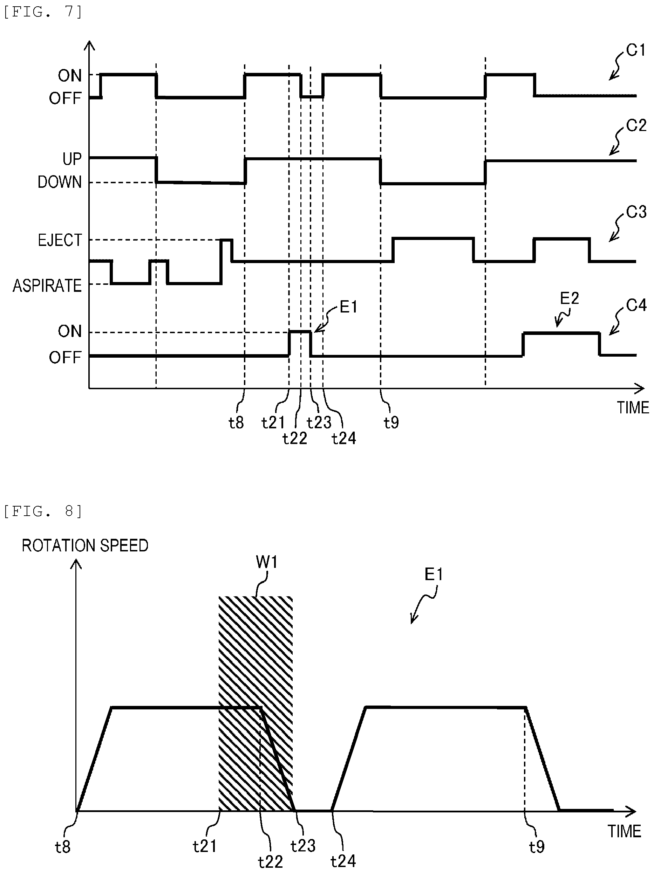

The sample probe cleaning unit 110 cleans the outside of the sample probe 122 with cleaning water W (see FIG. 2C and the like) . There are the following two types of cleaning of the sample probe 122 by the sample probe cleaning unit 110. (1) Intermediate cleaning E1 (see FIG. 7 and the like) is performed between the aspiration of the sample P from the sample container 152 and the ejection of the sample P to the reaction vessel 131. (2) Post-dispensing cleaning E2 (see FIG. 6 and the like) performed after the ejection of the sample P into the reaction vessel 131. Further, an operation of performing both the intermediate cleaning E1 and the post-dispensing cleaning E2 is referred to as first cleaning, and an operation of performing only the post-dispensing cleaning E2 is referred to as second cleaning. The cleaning by the sample probe cleaning unit 110 will be described later.

A plurality of reagent containers 141 can be placed on a circumference of the reagent disk 140. The reagent disk 140 is kept cold.

The reagent dispensing unit 161 capable of rotating and moving a reagent probe 164 in the up-down direction is disposed between the reaction disk 130 and the reagent disk 140. The reagent syringe 162 is connected to the reagent probe 164. When the reagent syringe 162 is driven, the reagent probe 164 aspirates and ejects the reagent. When the reagent is aspirated from the reagent container 141, the reagent probe 164 is moved upward by the reagent dispensing unit 161, and then moves to a position of the reaction vessel 131 while drawing an arc around a rotation axis. When the reagent probe 164 moves to the position of the reaction vessel 131, the sample probe 122 is lowered by the sample dispensing unit 121, and the sample P is dispensed into the reaction vessel 131.

The cleaning tanks 163 and 182, the reaction vessel cleaning unit 171, and the stirring unit 181 are disposed around the reaction disk 130. The stirring unit 181 stirs the sample P and the reagent that are dispensed into the reaction vessel 131. Each of the plurality of cleaning tanks 163 and 182 disposed separately cleans the reagent probe 164 and the stirring unit 181. Therefore, each of the cleaning tanks 163 and 182 is disposed on an operation range of the reagent probe 164 and the stirring unit 181.

The cleaning pump 174 is connected to the reaction vessel cleaning unit 171. The reaction vessel cleaning unit 171 cleans the reaction vessel 131 using a cleaning liquid supplied from the cleaning pump 174. The reaction vessel cleaning unit 171 cleans the reaction vessel 131 for which spectroscopic measurement is completed. After the spectroscopic measurement of the plurality of reaction vessels 131 is completed, it is desirable that the cleaning of the reaction vessels 131 is collectively performed.

The reaction vessel 131 in which the sample P and the reagent are stirred is irradiated with light by the light source 172, and the light transmitted through the reaction vessel 131 is spectrally measured by the spectrophotometer 173. Accordingly, a reaction between the sample P and the reagent is analyzed.

A detergent cleaning unit 184 that cleans the sample probe 122 with a detergent is disposed on a rotational movement trajectory of the sample probe 122. Normally, dispensing from one sample container 152 to the reaction vessel 131 is continuously performed a plurality of times. That is, the sample P is dispensed from one sample container 152 to the plurality of different reaction vessels 131. When the dispensing from one sample container 152 is completed, the sample probe 122 is cleaned by the detergent cleaning unit 184. At this time, the outside of the sample probe 122 is cleaned with a detergent by the detergent cleaning unit 184. The detergent cleaning unit 184 may have a bottle form in which the detergent is stored, and a method may be used in which the cleaning is performed by inserting the sample probe 122 into the bottle. Alternatively, a method may be used in which the detergent is supplied from a detergent container (not shown) separately connected to the detergent cleaning unit 184, and the detergent is ejected to the sample probe 122 to clean the sample probe 122.

Further, the controller 200 is connected to the sample dispensing unit 121, the sample syringe 123, the sample probe cleaning unit 110, the reagent dispensing unit 161, the reagent syringe 162, and the stirring unit 181. Further, the controller 200 is connected to the reagent disk 140, the sample transport unit 151, the cleaning pump 174, the spectrophotometer 173, and the like. Although connection lines are not shown in FIG. 1, the controller 200 is also connected to the reaction disk 130, the cleaning tanks 163 and 182, and the light source 172. That is, the controller 200 controls the sample dispensing unit 121, the sample syringe 123, the sample probe cleaning unit 110, the reagent dispensing unit 161, the reagent syringe 162, the stirring unit 181, the reaction disk 130, the reagent disk 140, the sample transport unit 151, the cleaning pump 174, the spectrophotometer 173, the cleaning tanks 163 and 182, and the light source 172. Among these controls, the control of the sample syringe 123 and the sample probe cleaning unit 110 will be described later.

### <Sample Probe Cleaning Unit 110>

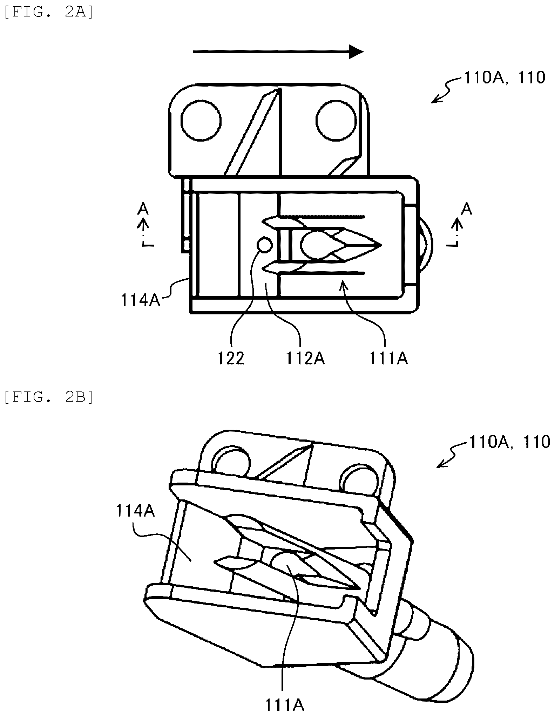

FIGS. 2A to 2C are diagrams showing a specific configuration of the sample probe cleaning unit 110. FIG. 2A is a top view of a sample probe cleaning unit 110A (110), FIG. 2B is a perspective view of the sample probe cleaning unit 110A, and FIG. 2C is a cross-sectional view of the sample probe cleaning unit 110A taken along line A-A in FIG. 2A.

Here, the sample probe cleaning unit 110A shown in FIGS. 2A to 2C shows an example in which the cleaning water W is ejected from below to the sample probe 122.

As shown in FIGS. 2A to 2C, the sample probe cleaning unit 110A includes a cleaning water ejection unit 111A, a cleaning water collection unit 112A, and a cleaning water transfer unit 113A. In FIG. 2C, a movement path of the cleaning water W is indicated by a broken line arrow. In the example shown in FIGS. 2A and 2B, the cleaning water ejection unit 111A is constituted such that an ejection direction of the cleaning water W is upward. The cleaning water W ejected upward from the cleaning water ejection unit 111A through the cleaning water transfer unit 113A cleans the outside of the sample probe 122 and is then collected by the cleaning water collection unit 112A.

The sample probe 122 moves in a lateral direction of a paper plane of FIG. 2A (direction of solid line arrow). A left side of the paper plane is the sample container 152 side, and a right side of the paper plane is the reaction vessel 131 side. However, a moving direction of the sample probe 122 is not limited to the direction.

As described above, in FIGS. 2A to 2C, the sample probe 122 moves from a position of the sample container 152 (left side of the paper plane in FIG. 2A) toward the reaction vessel 131 (right side of the paper plane in FIG. 2A) (solid line arrow). At this time, the sample probe 122 moves in a direction facing an ejection direction of the cleaning water W. Accordingly, scattering of the cleaning water W may occur. In such a case, the controller 200 controls the sample probe cleaning unit 110 to eject the cleaning water W in advance before the sample probe 122 reaches the sample probe cleaning unit 110 from the position of the sample container 152 (described later with reference to FIGS. 7 and 8). When the sample probe 122 reaches the sample probe cleaning unit 110, the controller 200 stops the sample probe 122. After the ejection of the cleaning water W is stopped and all of the cleaning water W is collected by the cleaning water collection unit 112A, the movement of the sample probe 122 is resumed. In this way, the scattering of the cleaning water W can be reduced.

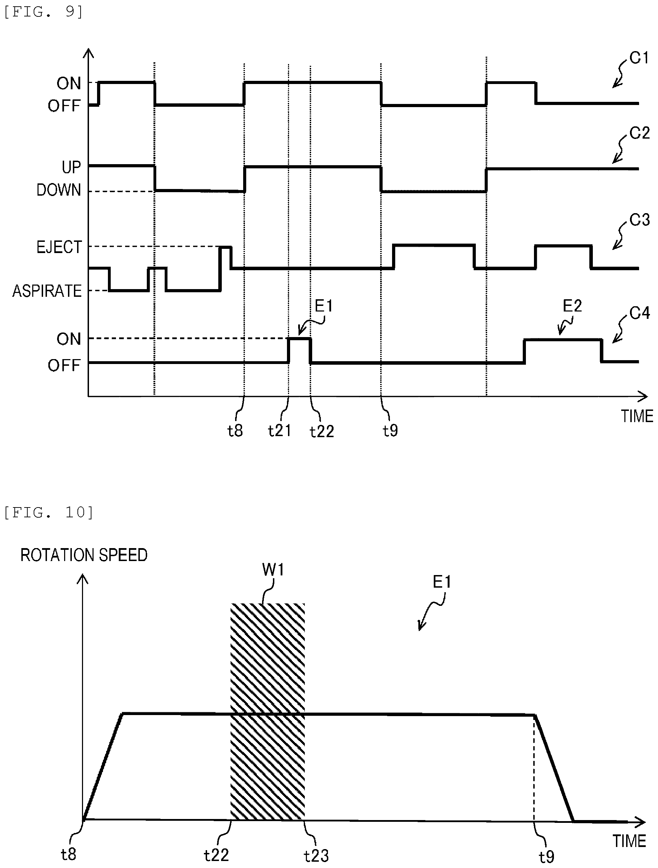

The sample probe cleaning unit 110A may be disposed so that the moving direction of the sample probe 122 is opposite to that of the example of FIGS. 2A and 2B. In such a case, the ejection direction of the cleaning water W and the moving direction of the sample probe 122 are the same. That is, the ejection direction of the cleaning water W and the moving direction of the sample probe 122 do not face each other. In this way, when the sample probe 122 is moved from the position of the sample container 152 to the reaction vessel 131 side, even if the sample probe 122 is operated without being stopped once (to be described later with reference to FIGS. 9 and 10), a scattering amount is small. In such a case, the scattering can be prevented by a design such as raising a wall 114A of the sample probe cleaning unit 110. A reference numeral D1 in FIG. 2C will be described later.

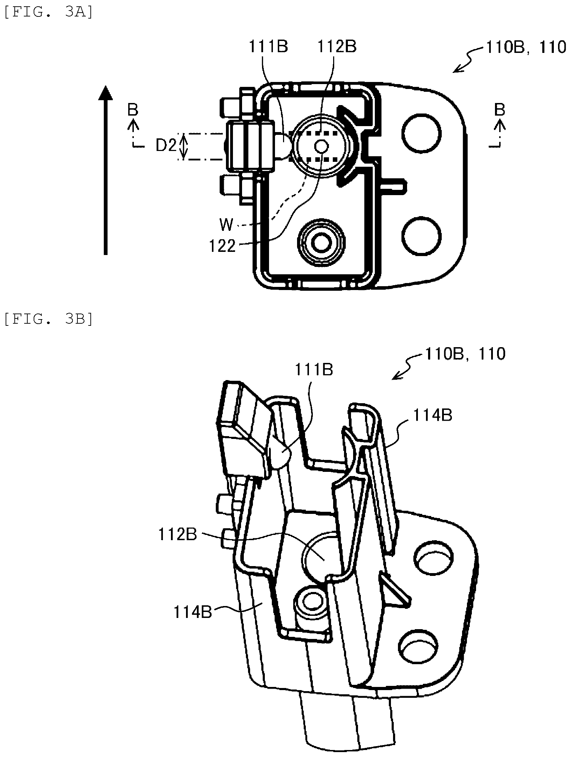

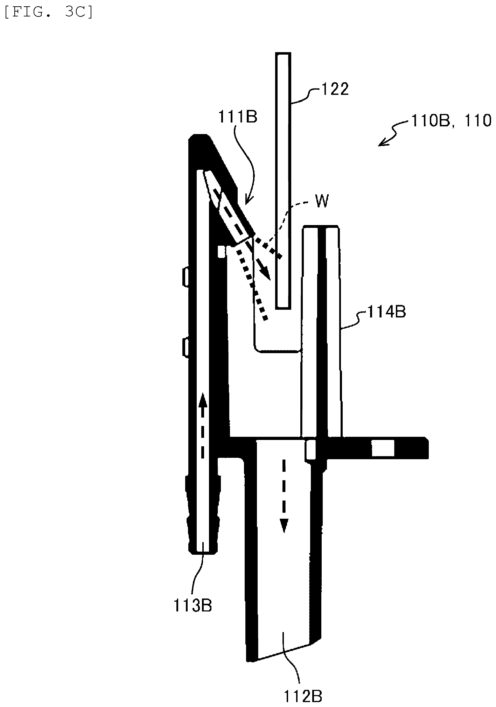

FIGS. 3A to 3C are diagrams showing a specific configuration of the sample probe cleaning unit 110. FIG. 3A is a top view of a sample probe cleaning unit 110B (110), FIG. 3B is a perspective view of the sample probe cleaning unit 110B, and FIG. 3C is a cross-sectional view of the sample probe cleaning unit 110B taken along line B-B in FIG. 3A.

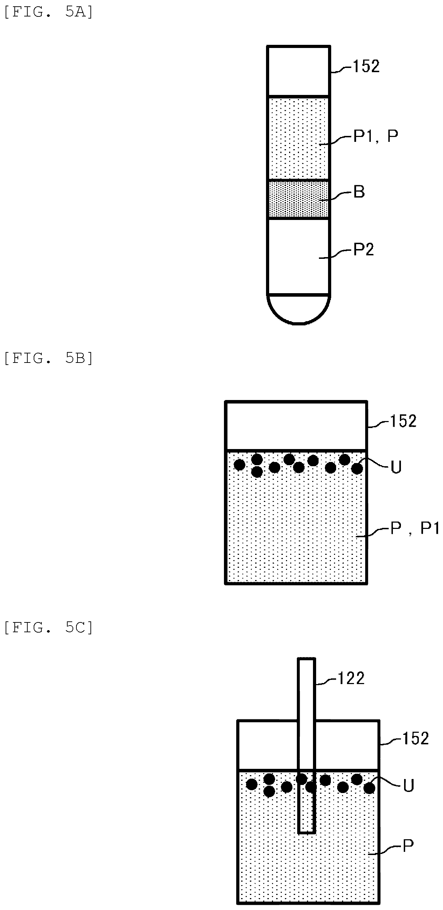

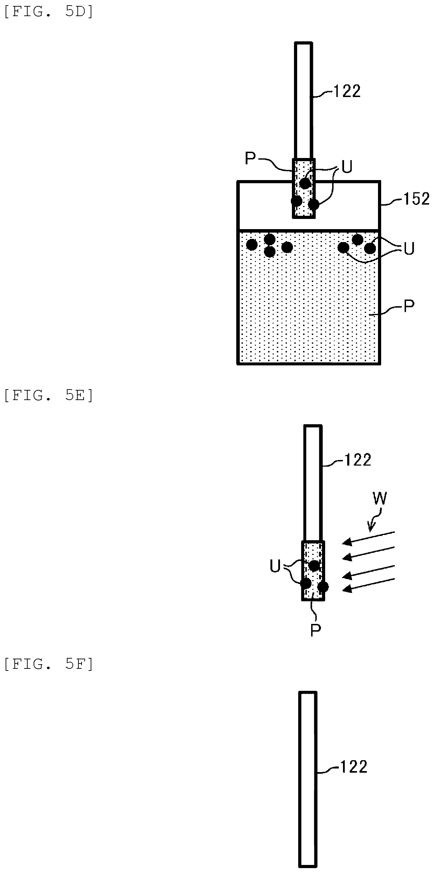

Here, the sample probe cleaning unit 110B shown in FIGS. 3A to 3C shows an example in which the cleaning water W (see FIG. 5E) is ejected from above to the sample probe 122.

As shown in FIGS. 3A to 3C, the sample probe cleaning unit 110B includes a cleaning water ejection unit 111B, a cleaning water collection unit 112B, and a cleaning water transfer unit 113B. In FIG. 3C, a movement path of the cleaning water W is indicated by a broken line arrow. As shown in FIGS. 3B and 3C, the cleaning water ejection unit 111B is constituted such that an ejection direction of the cleaning water W is downward. The cleaning water W ejected downward from the cleaning water ejection unit 111B through the cleaning water transfer unit 113B cleans the outside of the sample probe 122 and is then collected by the cleaning water collection unit 112B.

As shown in FIG. 3A, the sample probe 122 moves in a vertical direction of the paper plane (solid line arrow in FIG. 3A). A lower side of the paper plane is the sample container 152 side, and an upper side of the paper plane is the reaction vessel 131 side. However, the moving direction of the sample probe 122 is not limited to the direction.

Here, in the case of the sample probe cleaning unit 110B shown in FIGS. 3A to 3C, the sample probe 122 is not necessary to stop during a rotational movement from an aspiration position of the sample P to the reaction vessel 131 (described later with reference to FIGS. 9 and 10). That is, the outside of the sample probe 122 can be cleaned by an operation in which the sample probe 122 passes through the sample probe cleaning unit 110 in a state in which the cleaning water W is ejected. A thickness of the cleaning water W traversed by the sample probe 122 is different (reference numeral D1 in FIG. 2C > reference numeral D2 in FIG. 3C). That is, the thickness of the cleaning water W traversed by the sample probe 122 in the sample probe cleaning unit 110B shown in FIGS. 3A to 3C is smaller than that in the sample probe cleaning unit 110A shown in FIGS. 2A to 2C. Therefore, in the configuration of the sample probe cleaning unit 110B, the scattering amount of the cleaning water W is small. Accordingly, the scattering of the cleaning water W can be sufficiently prevented by a wall 114B surrounding a periphery of the sample probe cleaning unit 110B.

Of course, as described in the sample probe cleaning unit 110A of FIGS. 2A to 2C, the movement of the sample probe 122 after the sample probe 122 is once stopped in the sample probe cleaning unit 110B does not cause a problem.

### <Problems of Method So Far>

FIGS. 4A to 4F are diagrams showing problems of the method so far.

As shown in FIG. 4A, when the sample container 152 into which blood after blood collection is dispensed is centrifuged, plasma and serum P1 and blood cells P2 are separated. A separation agent B for separating the plasma and serum P1 and the blood cells P2 exists between the plasma and serum P1 and the blood cells P2. As shown in FIG. 4B, in an upper layer portion of the plasma and serum P1, there is a layer containing a large amount of unstable components U that should originally exist below the separation agent B. Depending on a condition of the centrifugation, most of the unstable components U are often included in a range of 2 mm in depth from a surface. Hereinafter, the plasma and serum P1 will be described as the sample P.

An insertion depth of the sample probe 122 at the time of aspirating the sample P is generally about 3 mm to 4 mm in order to prevent empty aspiration. As described above, the unstable components U often exist in the range of 2 mm in a surface layer. Therefore, when the insertion depth of the sample probe 122 is set to 3 mm to 4 mm, as shown in FIG. 4C, the sample P (plasma and serum P1) is aspirated from a lower layer of the range including the unstable components U. In this way, the sample probe 122 does not aspirate the unstable components U. Although the aspirated sample P is included in the sample probe 122, the illustration thereof is omitted here.

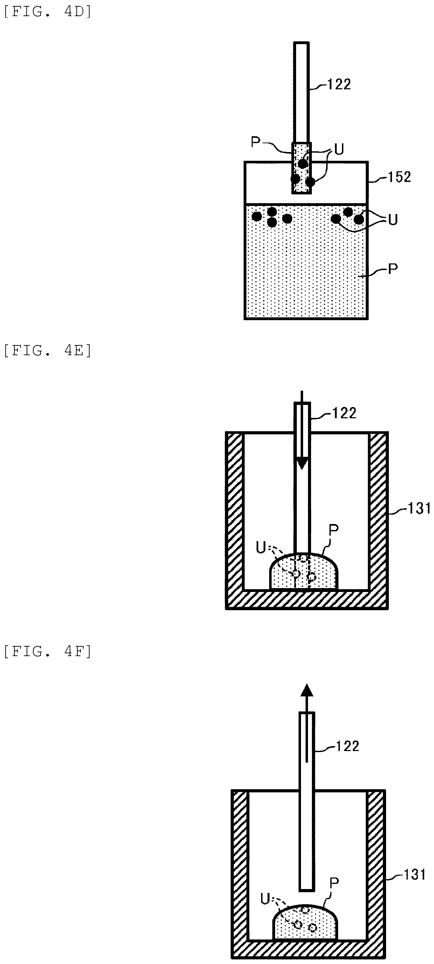

However, when the sample probe 122 is pulled out from the sample P after the aspiration of the sample P is completed, the sample P adheres to the outside of the sample probe 122 as shown in FIG. 4D. At this time, as shown in FIG. 4D, the unstable components U are included in the sample P adhering to the outside of the sample probe 122. Accordingly, the unstable components U may adhere to the outside of the sample probe 122.

Further, when the sample P is ejected into the reaction vessel 131, as shown in FIG. 4E, the sample P is ejected in a state where the sample probe 122 is in contact with a bottom surface of the reaction vessel 131 (an arrow in FIG. 4E). Normally, a tip of the sample probe 122 has a structure in which the tip is generally cut obliquely. Therefore, even if the sample probe 122 is brought into contact with the reaction vessel 131, the sample probe 122 is not blocked, and the sample P can be stably ejected.

In general, an amount of the sample P aspirated by the sample probe 122 is very small. Therefore, as shown in FIG. 4E, the ejected sample P has a dome shape around the sample probe 122 due to surface tension, and does not drop. At this time, as shown in FIG. 4E, the unstable components U adhering to the outside of the sample probe 122 are mixed in the dome-shaped sample P.

When the sample probe 122 is pulled out and moved upward from the state shown in FIG. 4E (an arrow in FIG. 4F), the unstable components U mixed in the sample P may remain in the reaction vessel 131 as shown in FIG. 4F.

After the reagent is dispensed into the reaction vessel 131 from the state shown in FIG. 4E and a reaction liquid is stirred by the stirring unit 181, measurement is performed. However, since the unstable components U may be contained in the reaction liquid, a stable measurement result may not be obtained.

As shown in FIG. 4E, it is also conceivable to eject the sample P in a state where the sample probe 122 floats from the bottom surface of the reaction vessel 131, instead of the state where the sample probe 122 is in contact with the bottom surface of the reaction vessel 131. However, as described above, the amount of the sample P aspirated by the sample probe 122 is very small. Therefore, when the sample P is ejected in the state where the sample probe 122 floats from the bottom surface of the reaction vessel 131, the sample P stays around an ejection port of the sample probe 122 in a lump shape due to the surface tension. Accordingly, the sample P cannot be dispensed into the reaction vessel 131. Even if the sample probe 122 floats from the bottom surface of the reaction vessel 131, the ejection is possible as long as a distance between the tip of the sample probe 122 and the reaction vessel 131 is extremely short.

### <Method in Intermediate Cleaning E1 in Present Embodiment>

FIGS. 5A to 5H are diagrams showing a method in the intermediate cleaning E1 in the present embodiment. In FIGS. 5A to 5H, the same components as those in FIGS. 4A to 4F are denoted by the same reference numerals, and the description thereof will be omitted.

Since FIGS. 5A to 5D are the same as FIGS. 4A to 4D, description thereof will be omitted.

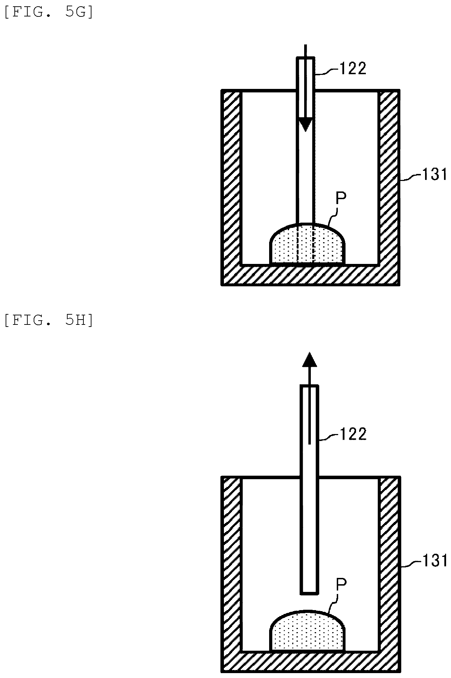

In FIG. 5D, after the aspiration of the sample P is performed and before the ejection of the sample P to the reaction vessel 131, as shown in FIG. 5E, the sample probe cleaning unit 110 cleans the outside of the sample probe 122 with the cleaning water W. As a result, as shown in FIG. 5F, the unstable components U are washed away together with the sample P adhering to the outside of the sample probe 122. Thereafter, as shown in FIG. 5G, the sample P is ejected into the reaction vessel 131 in a state where the sample probe 122 is in contact with the bottom surface of the reaction vessel 131 (an arrow in FIG. 5G). As shown in FIG. 5E, the ejection is performed in a state where the unstable components U adhering to the outside of the sample probe 122 are washed away by the sample probe cleaning unit 110 before the ejection to the reaction vessel 131. When the sample probe 122 is pulled up (an arrow in FIG. 5H), as shown in FIG. 5H, the unstable components U are not mixed in the sample P ejected into the reaction vessel 131, so that the stable measurement result can be obtained.

### <Timing Chart: Second Cleaning>

FIG. 6 is a timing chart of the second cleaning. The timing chart shown in FIG. 6 indicates ON and OFF of a control signal transmitted from the controller 200.

In the timing chart shown in FIG. 6, a rotational movement of the sample probe 122 by the sample dispensing unit 121 (chart C1), an up-down movement of the sample probe 122 (chart C2), a driving state of the sample syringe 123 (chart C3), and ON and OFF of the ejection of the cleaning water W by the sample probe cleaning unit 110 (chart C4) are shown in an order from the top. For the charts C1 to C4, the same reference numerals are used in the subsequent timing charts.

First, when the dispensing of the sample P is completed at a previous time, the rotational movement of the sample dispensing unit 121 is started (time point t1). Accordingly, the sample probe 122 starts rotating and moving from the sample probe cleaning unit 110 to the position of the sample container 152 (chart C1).

During the rotational movement of the sample probe 122 from the sample probe cleaning unit 110 to the position of the sample container 152, the sample dispensing unit 121 aspirates air by the sample probe 122 (time point t2: chart C3). Although the sample probe 122 is filled with system water different from the cleaning water W, air is aspirated, so that air is present between the system water and the sample P. Accordingly, the system water and the sample P can be prevented from being mixed. After initial aspiration, the aspiration of air may be omitted.

The aspiration of air ends before the sample probe 122 reaches the position of the sample container 152 (time point t3) .

When the sample probe 122 reaches the position of the sample container 152, lowering of the sample probe 122 by the sample dispensing unit 121 is instructed (time point t4) .

When the sample probe 122 is lowered by a predetermined amount, the sample P in the sample container 152 is aspirated into the sample probe 122 by the sample syringe 123 (time point t5). When the aspiration of the sample P is completed at a time point t6, the ejection of the sample P due to backlash is performed (time points t6 to t7: chart C3).

When the backlash is completed, the sample probe 122 is moved upward, and the rotational movement from the position of the sample container 152 to the position of the reaction vessel 131 is started (time point t8).

At a time point t9, when the sample probe 122 reaches the position of the reaction vessel 131, the rotational movement is stopped (chart C1), and the sample probe 122 starts to lower down (chart C2).

When the lowering of the sample probe 122 is completed, the sample syringe 123 is driven (chart C3), and the sample P is ejected to the reaction vessel 131 (time points t10 to t11).

When the ejection of the sample P is completed (time point t11), the sample probe 122 is moved upward (chart C2), and the rotational movement from the position of the reaction vessel 131 to the position of the sample probe cleaning unit 110 is started (t12: chart C1).

Before the sample probe 122 reaches the sample probe cleaning unit 110, the ejection of the cleaning water W by the sample probe cleaning unit 110 is turned ON (time point t13: chart C4).

When the sample probe 122 reaches the sample probe cleaning unit 110, the rotational movement is stopped (chart C1). Further, as the rotational movement is stopped, the sample P remaining in the sample probe 122 is ejected by the sample syringe 123 (time point t14: chart C4). At the time point t14, since the cleaning water W is already ejected, the outside of the sample probe 122 and the sample P remaining in the sample probe 122 are washed away. That is, the post-dispensing cleaning E2 is performed.

When the cleaning of the sample probe 122 is completed, the sample syringe 123 is moved upward and returned to a predetermined position (time point t15: chart C3). Thereafter, the ejection of the cleaning water W in the sample probe cleaning unit 110 is turned OFF (time point t16: chart C4).

As described above, in the second cleaning, an operation of cleaning the outside of the sample probe 122 is not performed until the ejection of the sample P to the reaction vessel 131 is completed after the aspiration of the sample P.

### <Time Chart: First Cleaning>

FIG. 7 is a timing chart showing the first cleaning in the first embodiment. The timing chart shown in FIG. 7 indicates ON and OFF of a control signal transmitted from the controller 200. In FIG. 7, the same components as those in FIG. 6 are denoted by the same reference numerals, and only components different from those in FIG. 6 will be described.

In FIG. 7 and subsequent timing charts (FIGS. 7, 9, 11, 13, 14A, 14B, 15A, and 15B), time points other than necessary time points are not shown in order to avoid complication. In FIGS. 7, 9, 11, 13, 14A, 14B, 15A, and 15B, the time points not shown are the same as that in FIG. 6.

An operation shown in FIG. 7 is different from the operation shown in FIG. 6 in that the intermediate cleaning E1 is performed after aspirating the sample P from the sample container 152 and before ejecting the sample P to the reaction vessel 131.

That is, the aspiration and backlash of the sample P are completed, and the rotational movement from the position of the sample container 152 to the position of the reaction vessel 131 is started (chart C1). The operation is the same as the operation performed at the time point t8 in FIG. 6.

Further, before the sample probe 122 reaches the position of the sample probe cleaning unit 110, the ejection of the cleaning water W by the sample probe cleaning unit 110 is turned ON (time point t21: chart C4).

Thereafter, when the sample probe 122 reaches the sample probe cleaning unit 110, the rotational movement by the sample dispensing unit 121 is stopped (time point t22: chart C1). Accordingly, the outside of the sample probe 122 is cleaned.

When the cleaning is completed, first, the ejection of the cleaning water W is turned OFF (time point t23: chart C4), and then the rotational movement by the sample dispensing unit 121 is resumed (time point t24: chart C1). Thereafter, the same processing as that after the time point t9 in FIG. 6 is performed.

### (Rotation Speed of Sample Probe 122)

FIG. 8 is a diagram showing a temporal change in the rotation speed of the sample probe 122 between time points t8 and t9 in FIG. 7. In FIG. 8, a reference numeral W1 denotes a time during which the cleaning water W is turned ON.

Since each time point is the same as the time point shown in FIG. 7, the description is not given here, and since FIG. 8 shows a rotation operation, the rotation speed is inclined from the start of rotation until the rotation speed reaches a predetermined value. In the example of FIG. 8, the ejection of the cleaning water W is stopped substantially simultaneously with the stop of the rotational movement of the sample probe 122. However, the invention is not limited thereto, and the ejection of the cleaning water W may be performed for a predetermined time after the rotational movement of the sample probe 122 is stopped.

According to the first embodiment, as shown in FIGS. 7 and 8, the sample probe 122 is cleaned by the sample probe cleaning unit 110 in a moving process to the reaction vessel 131 after the aspiration of the sample P. In this way, the outside of the sample probe 122 can be cleaned in the sample probe cleaning unit 110 before the sample P is ejected to the reaction vessel 131. Accordingly, as shown in FIG. 5H, it is possible to prevent the unstable components U from being mixed in the sample P stored in the reaction vessel 131.

Since the rotational movement of the sample probe 122 is stopped while the intermediate cleaning E1 is performed, it is possible to improve a cleaning effect by the intermediate cleaning E1.

The second cleaning and the first cleaning are appropriately switched, and switching between the second cleaning and the first cleaning will be described later in a sixth embodiment.

As described above, in the case of the structure shown in FIGS. 2A and 2B, that is, the structure in which the cleaning water W is ejected from a lower side to an upper side, the operations as shown in FIGS. 7 and 8 are performed. That is, in the intermediate cleaning E1, the ejection of the cleaning water W is turned ON before the sample probe 122 reaches the position of the sample probe cleaning unit 110. Then, when the sample probe 122 reaches the position of the sample probe cleaning unit 110, the rotational movement of the sample probe 122 is stopped. Further, when the cleaning is completed, the ejection of the cleaning water W is turned OFF, and then the rotational movement of the sample probe 122 is resumed. By performing such an operation, the scattering of the cleaning water W can be reduced.

In FIGS. 7 and 8, the ejection of the cleaning water W is turned ON before the sample probe 122 reaches the position of the sample probe cleaning unit 110. Then, when the sample probe 122 reaches the position of the sample probe cleaning unit 110, the rotational movement of the sample probe 122 is stopped. However, the invention is not limited thereto. The sample probe 122 may reach the position of the sample probe cleaning unit 110, and the ejection of the cleaning water W may be turned ON (in FIGS. 7 and 8, the time point t21 and the time point t22 are the same time). Alternatively, the ejection of the cleaning water W may be turned ON after the sample probe 122 reaches the position of the sample probe cleaning unit 110 (in FIGS. 7 and 8, the time point t21 > the time point t22).

In FIGS. 7 and 8, the rotational movement of the sample probe 122 is resumed after the ejection of the cleaning water W is turned OFF, whereas the invention is not limited thereto. For example, the time point at which the ejection of the cleaning water W is turned OFF may coincide with the time point at which the resuming of the rotational movement of the sample probe 122 is started (in FIGS. 7 and 8, the time point t23 and the time point t24 are the same time). Alternatively, the ejection of the cleaning water W may be turned OFF after the resuming of the rotational movement of the sample probe 122 is started (in FIGS. 7 and 8, the time point t23 > the time point t24).

In the operations shown in FIGS. 7 and 8, since the operation of the intermediate cleaning E1 is added, it is desirable that each operation is different from that of the second cleaning. For example, it is desirable to increase a rotational movement speed, an upward movement speed, a lowering speed, and the like of the sample probe 122. In this way, even when the operation of the intermediate cleaning E1 is performed, an entire operation time can be made the same as that of the second cleaning.

Here, in the intermediate cleaning E1, the sample P adhering to the outside of the sample probe 122 is washed away together with the unstable components U. An amount of the sample P ejected from the sample probe 122 to the reaction vessel 131 generally includes the sample P adhering to the outside of the sample probe 122. Therefore, when the intermediate cleaning E1 is performed, the amount of the sample P finally ejected into the reaction vessel 131 decreases as compared with the second cleaning. When the sample P is ejected to the reaction vessel 131, the amount of the sample P adhering to the outside of the sample probe 122 is approximately 0.1 µL or less. However, in recent years, since the amount of the sample P tends to be reduced, presence or absence of the sample P adhering to the sample probe 122 has a large influence. For example, when an ejection amount to the reaction vessel 131 is 1 µL, an amount close to 10% of the ejection amount to the reaction vessel 131 is washed away by the intermediate cleaning E1.

Therefore, when the first cleaning in the present embodiment is used, it is desirable to provide correction for the first cleaning at the time of aspirating and ejecting the sample P into the reaction vessel 131. That is, it is desirable to aspirate as much sample P as an amount of the sample P to be washed away by the intermediate cleaning E1 at the time of aspirating the sample P in advance. When the sample P is ejected, it is desirable that the ejection is performed at a corrected ejection amount. That is, it is desirable to set the ejection amount to a sum of the amount of the sample P that is aspirated in a large amount at the time of aspirating the sample P. In this way, dispensing accuracy of the sample P can be ensured.

### [Second Embodiment]

Next, a second embodiment of the invention will be described with reference to FIGS. 9 and 10. In the following embodiments, as in the first embodiment, switching processing between the first cleaning and the second cleaning is performed, and the switching processing between the first cleaning and the second cleaning will be described later in the sixth embodiment (the same applies to the third to fifth embodiments).

### <Timing Chart: First Cleaning>

FIG. 9 is a timing chart showing the first cleaning in the second embodiment. The timing chart shown in FIG. 9 indicates ON and OFF of a control signal transmitted from the controller 200. In FIG. 9, the same components as those in FIG. 7 are denoted by the same reference numerals, and only components different from those in FIG. 7 will be described.

Further, FIG. 10 is a diagram showing a temporal change in a rotation speed of the sample probe 122 in the first cleaning of the second embodiment. In FIG. 10, the same components as those in FIG. 8 are denoted by the same reference numerals, and only components different from those in FIG. 8 will be described.

In the first cleaning shown in FIGS. 7 and 8, when the sample probe 122 reaches the position of the sample probe cleaning unit 110 in the intermediate cleaning E1, the rotational movement of the sample probe 122 is stopped. On the other hand, in the first cleaning shown in FIGS. 9 and 10, even when the sample probe 122 reaches the position of the sample probe cleaning unit 110 in the intermediate cleaning E1, the rotational movement of the sample probe 122 is not stopped.

When the sample probe cleaning unit 110 has a structure in which the cleaning water W is difficult to scatter (for example, a type in which the cleaning water W is ejected obliquely downward from above as shown in FIGS. 3A and 3B). In such a case, the rotational movement from the position of the sample container 152 to the position of the reaction vessel 131 may not be stopped. In such a case, as shown in FIGS. 9 and 10, it is possible to allow the sample probe 122 to pass through during the ejection of the cleaning water W. As described above, in the second embodiment, the intermediate cleaning E1 is performed without stopping the rotational movement of the sample probe 122. Accordingly, as in the first embodiment, since the time for the intermediate cleaning E1 is ensured, the entire processing can be completed at the same time as the second cleaning without increasing the rotational movement speed, the upward movement speed, and the lowering speed of the sample probe 122.

Whether to stop the rotational movement of the sample probe 122 in the intermediate cleaning E1 as in the first embodiment or not to stop the rotational movement of the sample probe 122 as in the second embodiment may be determined by a user according to a configuration of the sample probe cleaning unit 110.

### [Third Embodiment]

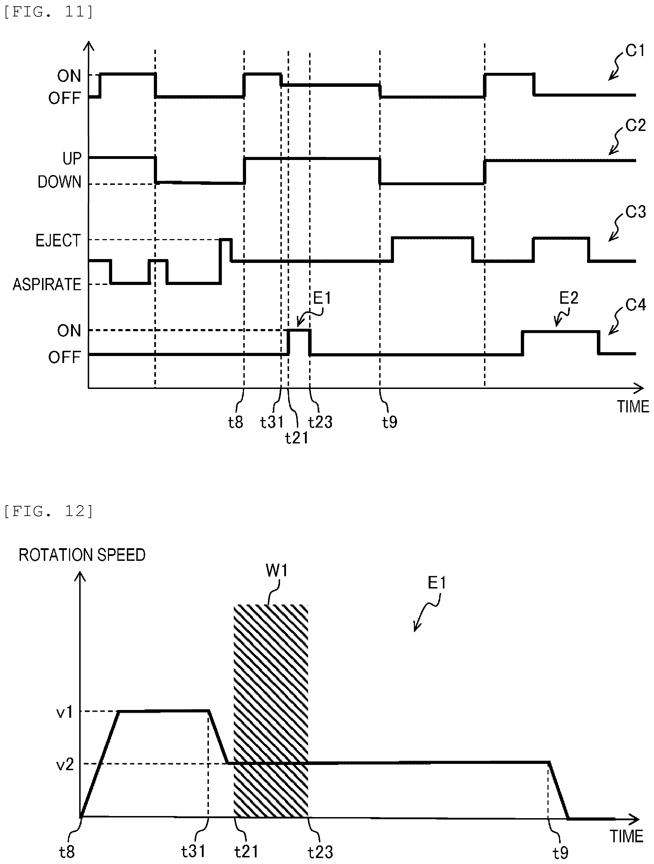

Next, a third embodiment of the invention will be described with reference to FIGS. 11 and 12.

### <Timing Chart: First Cleaning>

FIG. 11 is a timing chart showing the first cleaning in the third embodiment. The timing chart shown in FIG. 11 indicates ON and OFF of a control signal transmitted from the controller 200. In FIG. 11, the same components as those in FIG. 9 are denoted by the same reference numerals, and only components different from those in FIG. 9 will be described.

Further, FIG. 12 is a diagram showing a temporal change in a rotation speed of the sample probe 122 in the first cleaning of the third embodiment. In FIG. 12, the same components as those in FIG. 8 are denoted by the same reference numerals, and only components different from those in FIG. 8 will be described.

In the operations shown in FIGS. 11 and 12, as in FIGS. 9 and 10, the rotational movement of the sample probe 122 is not stopped in the intermediate cleaning E1. However, in the operations shown in FIGS. 11 and 12, a rotational movement speed of the sample probe 122 is reduced before the sample probe 122 reaches the sample probe cleaning unit 110 (time point t31: chart C1 of FIG. 11). That is, as shown in FIG. 12, at the time point t31, the rotational movement speed is reduced from a rotational movement speed v1 to a rotational movement speed v2 (v2 < v1).

Further, after the rotational movement speed of the sample probe 122 is sufficiently reduced, the cleaning water W is ejected (time point t21).

According to the third embodiment, it is possible to lengthen a cleaning time by reducing the rotational movement speed of the sample probe 122 in the intermediate cleaning E1. Therefore, the outside of the sample probe 122 can be cleaned more than in the first embodiment and the second embodiment.

Further, scattering of the cleaning water W can be reduced by reducing the rotational movement speed of the sample probe 122 in the intermediate cleaning E1.

As shown in FIGS. 11 and 12, when the rotational movement speed of the sample probe 122 is reduced in the intermediate cleaning E1, a movement time of the sample probe 122 from the position of the sample container 152 to the position of the reaction vessel 131 increases. Therefore, it is desirable to increase a rotational movement speed, an upward movement speed, a lowering speed, and the like of the sample probe 122 other than in the intermediate cleaning E1. In this way, it is possible to reduce a time difference from the second cleaning, and it is possible to prevent the entire processing time from being lengthened.

In the operations shown in FIGS. 11 and 12, the rotational movement speed once reduced remains at a lowered speed until moving to the position of the reaction vessel 131, whereas the rotational movement speed may be returned to an original speed after the ejection of the cleaning water W is turned OFF.

### [Fourth Embodiment]

### <Timing Chart: First Cleaning>

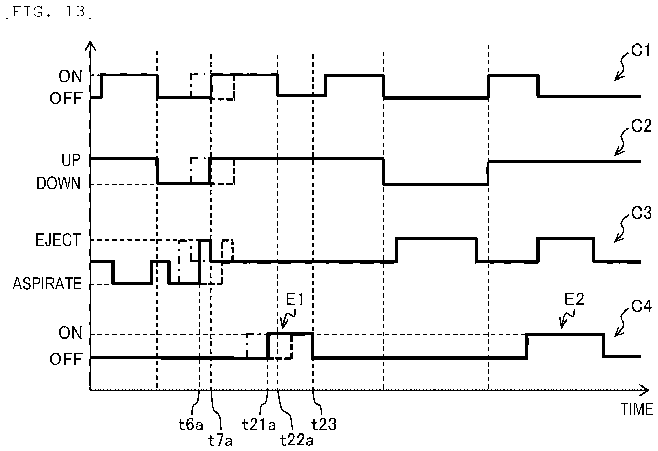

FIG. 13 is a timing chart showing a first cleaning in a fourth embodiment. The timing chart shown in FIG. 13 indicates ON and OFF of a control signal transmitted from the controller 200. In FIG. 9, the same components as those in FIGS. 6 and 7 are denoted by the same reference numerals, and only components different from those in FIG. 7 will be described.

In an operation shown in FIG. 13, an aspiration completion time point to a backlash completion time point (time points t6a to t7a) of the sample P is advanced (chart C3). In FIG. 13, broken lines indicate operation timings in FIG. 7. Further, as the aspiration completion time point to the backlash completion time point of the sample P is advanced, a rotational movement start time point of the sample probe 122 is also advanced (time point t7a: chart C1) .

As the rotational movement start time point of the sample probe 122 is advanced, a time point at which the sample probe 122 reaches the position of the sample probe cleaning unit 110 is also advanced. Therefore, time points when the ejection of the cleaning water W is turned ON and time points when the rotational movement of the sample probe 122 is stopped are also advanced (time points t21a and t22a: charts C1 and C4).

When the rotational movement start time point is advanced to a one-dot chain line of the chart C3, a time point at which the ejection of the cleaning water W is turned ON is also advanced as shown by a one-dot chain line of the chart C4. The time point at which the ejection of the cleaning water W is turned OFF (time point t23) and a time point at which the rotational movement of the sample probe 122 is resumed (time point t24) are the same as those shown in FIG. 7.

That is, in the operation shown in FIG. 13, an aspiration time of the sample P is shortened, and a time of the intermediate cleaning E1 is correspondingly lengthened. That is, a time during which the ejection of the cleaning water W by the sample probe cleaning unit 110 is turned ON is lengthened, and a time during which the rotational movement of the sample probe 122 is stopped is lengthened. Accordingly, a cleaning time of the intermediate cleaning E1 is lengthened. In short, the shorter the aspiration time of the sample P is, the longer the time of the intermediate cleaning E1 is.

In the fourth embodiment, the rotational movement of the sample probe 122 is stopped, and as shown in FIGS. 11 and 12, the rotational movement speed may be slower than before the sample probe 122 reaches the position of the sample probe cleaning unit 110.

An inspection item that is likely to interfere with an inspection result due to unstable components U is known in advance. Therefore, in the inspection item that is likely to interfere with the inspection result due to the unstable components U, as shown in FIG. 13, a time for aspirating the sample P necessary for analysis is shortened. Specifically, the aspiration time of the sample P is shortened by increasing an aspiration speed of the sample syringe 123, and the upward movement and the rotational movement of the sample probe 122 is started after an aspiration operation of the sample P is completed. Alternatively, when an amount of the sample P necessary for the inspection item that is likely to interfere with the inspection result due to the unstable components U is small, a minimum aspiration time necessary for aspirating the sample P is ensured.

For example, it is assumed that 500 ms is ensured as a time required for the aspiration operation of a general sample P to complete the aspiration operation of 1 µL to 25 µL. On the other hand, it is assumed that the amount of the sample P required for the inspection item that is likely to interfere with the inspection result due to the unstable components U is 2 µL, and the aspiration time required at that time is 200 ms. In such a case, it is possible to start the rotational movement of the sample probe 122 300 ms earlier, and it is possible to start the intermediate cleaning E1 300 ms earlier.

As described above, in the first cleaning in the fourth embodiment, the rotational movement of the sample probe 122 is started at an earlier time than the first cleaning in the first embodiment. Accordingly, since a start time point of the intermediate cleaning E1 can be advanced, the time of the intermediate cleaning E1 can be lengthened. Therefore, according to the fourth embodiment, the outside of the sample probe 122 can be cleaned more than in the first embodiment.

### [Fifth Embodiment]

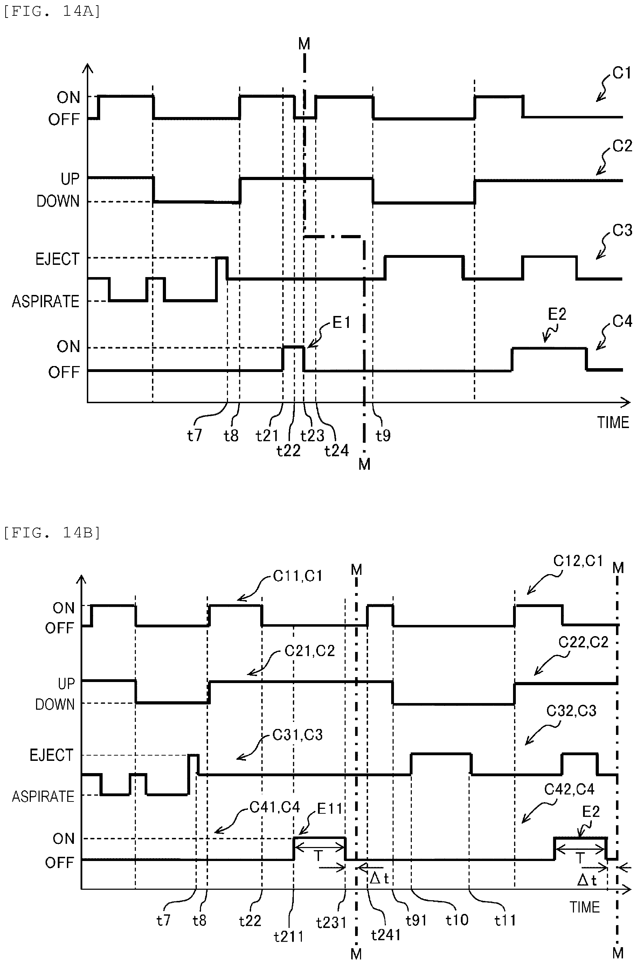

In the fourth embodiment described above, the cleaning of the outside of the sample probe 122 is described, whereas it is also conceivable that the cleaning of the outside of the sample probe 122 may be insufficient. In the time charts of FIGS. 6, 7, 9, 11, and 13 in the above described embodiments, it is assumed that all of the dispensing operations are performed in one cycle. On the other hand, the fifth embodiment aims to ensure a long time for an intermediate cleaning E11 (FIG. 14B) by performing the first cleaning in a plurality of cycles. Accordingly, the sample probe 122 can be sufficiently cleaned, and a more stable dispensing result can be obtained. In the fifth embodiment, the controller 200 sets a predetermined time as one cycle, and controls an operation of the automatic analysis system 1. For example, one cycle is 3.6 seconds.

The fifth embodiment according to the invention will be described in detail with reference to FIGS. 14A and 14B.

### <Timing Chart: First Cleaning>

FIG. 14A is a diagram in which M-M, which is a one-dot chain line indicating a boundary of a cycle, is inserted into the same timing chart as that of FIG. 7. FIG. 14A shows that the timing chart in FIG. 7 performed in one cycle is divided into two cycles at a position of the M-M.

FIG. 14B is a diagram specifically showing an operation of the timing chart in FIG. 14A which is divided into two cycles by the M-M. In FIG. 14B, boundaries of the cycles are indicated by the M-M lines (one-dot chain lines). An execution time of each cycle is the same.

The timing chart shown in FIG. 14B indicates ON and OFF of a control signal transmitted from the controller 200. In FIG. 14B, the same components as those in FIG. 7 are denoted by the same reference numerals, and only components different from those in FIG. 7 will be described. In FIG. 14B, the chart C1 is divided into a first half part (reference numeral C11) and a second half part (reference numeral C12). The same applies to the charts C2 and C3 (first half parts: reference numerals C21, C31, and C41, and second half parts: reference numerals C22, C32, and C42) . In FIG. 14B, two M-M lines are shown, and the M-M line on a left side of the paper plane shows an end of the first half part and a start of the second half part. The M-M line on a right side of the paper plane shows an end of the second half part and a start of the first half part. Each of periods from a certain M-M line to a next M-M line has the same length.

An operation shown in FIG. 14B is different from the operation shown in FIG. 7 in that the intermediate cleaning E11 is performed after the sample P is aspirated from the sample container 152 in a first cycle (time point t7) and before the sample P is moved to the reaction vessel 131 (before the sample P reaches the reaction vessel 131 (time point t91)). While the intermediate cleaning E11 is performed, the movement of the sample probe 122 is stopped, whereas the intermediate cleaning E11 may be performed while the sample probe 122 is moved. Further, in the present embodiment, rotation to the reaction vessel 131 (time points t241 to t91) is performed in a second cycle, dispensing to the reaction vessel 131 is performed (time points t10 to t11), and the post-dispensing cleaning E2 is performed after the dispensing.

That is, the aspiration and backlash of the sample P are completed (time point t7), and the rotational movement from the position of the sample container 152 to the position of the sample probe cleaning unit 110 is started (first half of chart C1: reference numeral C11). The operation is the same as the operation performed at the time points t7 to t8 in FIG. 7.

Further, after the sample probe 122 reaches the position of the sample probe cleaning unit 110, the ejection of the cleaning water W by the sample probe cleaning unit 110 is turned ON (time point t211: first half of chart C4: reference numeral C41). This is the operation of the intermediate cleaning E11. Here, it is desirable that a cleaning time is equal to a time of the post-dispensing cleaning E2 (both the time during which the intermediate cleaning E11 is performed and the time during which the post-dispensing cleaning E2 is performed are T). This is because the outside of the sample probe 122 can be sufficiently cleaned during the post-dispensing cleaning E2 performed when the sample P is switched, and even if the unstable components U adhere, the unstable components U can be sufficiently removed.

In the fifth embodiment, although the illustration of the automatic analysis system 1 as shown in FIG. 1 is omitted, a cleaning water pump (not shown) is connected to the sample probe cleaning unit 110, and the cleaning water W is ejected using the cleaning water pump. The cleaning water W is ejected from each of the cleaning tanks 163 and 182 in order to clean the reagent probe 164 and the stirring unit 181. For example, the sample probe cleaning unit 110 and the cleaning tanks 163 and 182 perform the ejection by one cleaning water pump, and ON/OFF of the ejection of the cleaning water is controlled by an electromagnetic valve (not shown). At cleaning start times in the sample probe cleaning unit 110 and the cleaning tanks 163 and 182 used for cleaning, each cleaning is performed for a predetermined time in one cycle. In one cycle, since each of the electromagnetic valves is opened and closed at the same timing, when the electromagnetic valve is opened and closed when the cleaning water W is used, water pressure of the cleaning water pump varies in a predetermined manner. When the electromagnetic valve is opened, the water pressure in the cleaning water pump decreases, and when the electromagnetic valve is closed, the water pressure in the cleaning water pump increases. In consideration of the decrease and the increase in the water pressure, driving of the cleaning water pump is controlled so that the cleaning water W is ejected at predetermined water pressure. By performing predetermined control, the water pressure does not vary in one cycle, and the cleaning water W can be ejected at stable water pressure.

When the intermediate cleaning E11 of the sample probe 110 is performed in the first half cycle of the first cleaning, if an opening and closing time of the electromagnetic valve of the sample probe 110 is set to the same time (timing) as that of the post-dispensing cleaning E2 in one cycle, the water pressure in the first cleaning and the water pressure in the second cleaning similarly vary. Therefore, when the cleaning water pump is controlled in the same manner for the first cleaning and the second cleaning, the cleaning water W can be ejected at the predetermined water pressure. However, if a start time of the intermediate cleaning E11 in one cycle is different from that of the post-dispensing cleaning E2, a variation balance of the water pressure of the cleaning water pump is lost, which causes the water pressure at the time of performing the post-dispensing cleaning E2 to vary between the first cleaning and the second cleaning.

That is, in FIG. 14B, the water pressure of the cleaning water pump when performing the post-dispensing cleaning E2 is different between the case where the intermediate cleaning E11 is performed and the cleaning water W is once ejected (first cleaning) and the case where the intermediate cleaning E11 is not performed and the cleaning water W is not ejected (second cleaning). Accordingly, the water pressure at the time of performing the post-dispensing cleaning E2 varies between the first cleaning and the second cleaning. However, as described above, since the sample probe cleaning unit 110 and the cleaning tanks 163 and 182 may perform the ejection by one cleaning water pump, only presence or absence of the intermediate cleaning E11 (E1) does not simply cause the variation in the water pressure during performing the post-dispensing cleaning E2.

In the fifth embodiment, the time (timing) of the intermediate cleaning E11 and the post-dispensing cleaning E2 is operated at the same time (timing) in each cycle. That is, a time Δt between the boundary (one-dot chain line) of each cycle and a completion time point of each of the intermediate cleaning E11 and the post-dispensing cleaning E2 is the same, and the time T during which each of the intermediate cleaning E11 and the post-dispensing cleaning E2 is performed is the same. In other words, in each cycle, the start time point and the completion time point of the intermediate cleaning E11 and the post-dispensing cleaning E2 are the same. In this way, similar to the post-dispensing cleaning E2, the cleaning of the intermediate cleaning E11 can be used in common with the cleaning in the cleaning tanks 163 and 182. In this way, it is possible to limit a variation range of the pressure balance of the cleaning water W, which is pressurized by the cleaning water pump in the automatic analysis device 100 and used for cleaning even in other mechanisms, to a predetermined variation range. Therefore, cleaning efficiency of the post-dispensing cleaning E2 does not vary between the first cleaning and the second cleaning.

Even if the cleaning time of the sample probe 122 is "intermediate cleaning E11 < post-dispensing cleaning E2", it does not mean that the effect cannot be obtained. Even if the sample P adhering to a side surface of the sample probe 122 is not completely removed, the unstable components U may be removed by cleaning. Therefore, the cleaning time of the intermediate cleaning E11 may be determined while examining the cleaning efficiency of the post-dispensing cleaning E2. This also leads to water saving.

Thereafter, the dispensing is performed on the reaction vessel 131 in the next cycle (second half), the cleaning of an inner side and an outer side of the sample probe 122 (post-dispensing cleaning E2) is performed, and the dispensing cycle is completed.

In a case of a large amount dispensing (for example, 20 µL or more) in which a dispensing amount of the sample P is large, the dispensing may be performed by using two cycles. This is because an aspiration amount of the sample P is also large, so that the aspiration time and the cleaning time are required to be long.

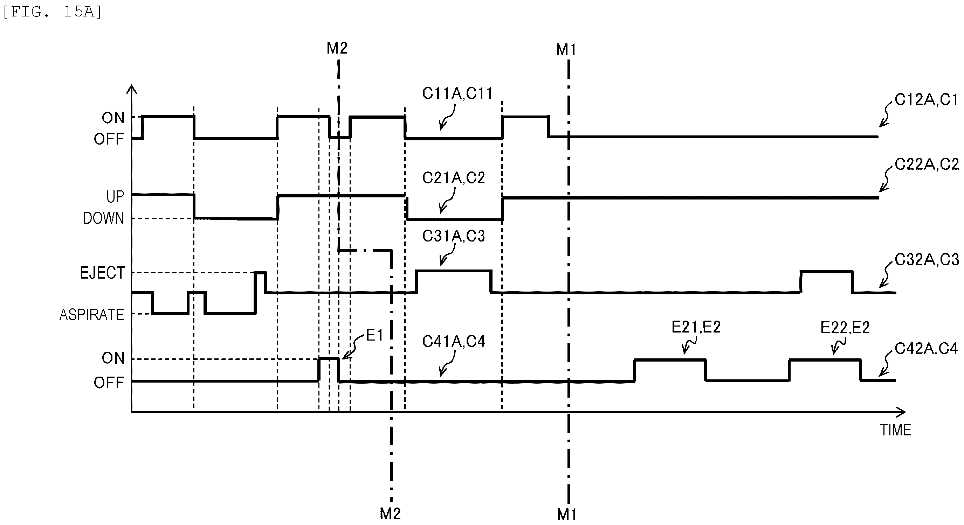

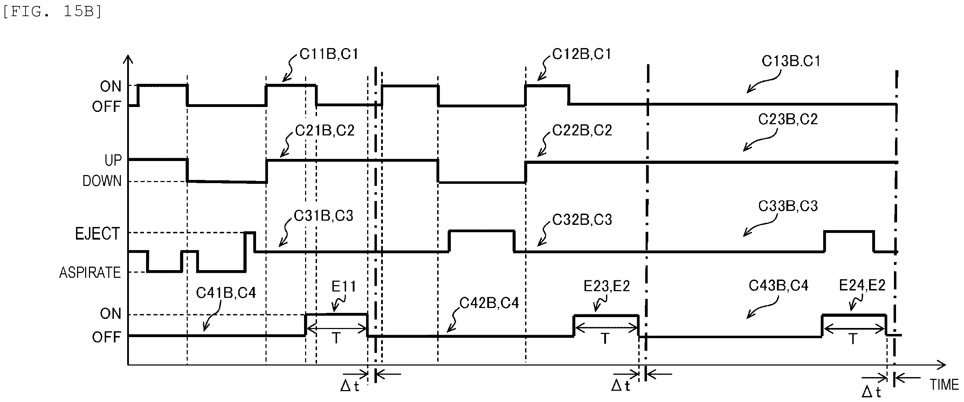

In order to eliminate the influence of the unstable components U even in the case of the large amount dispensing, the number of cycles may be changed from two to three. This will be described with reference to FIGS. 15A and 15B.

FIG. 15A is a timing chart showing a case where the processing is performed in two cycles. In FIG. 15A, a boundary of the cycle is indicated by a one-dot chain line M1-M1. FIG. 15B shows a timing chart in which the cycle is further divided by a one-dot chain line M2-M2 in FIG. 15A in addition to the one-dot chain line M1-M1. FIGS. 15A and 15B show a large amount dispensing operation (for example, a dispensing amount of 20 µL). In FIGS. 15A and 15B, time points at which each processing is performed are not shown. Further, in FIGS. 15A and 15B, the same components as those in FIG. 7 are denoted by the same reference numerals, and the description thereof will be omitted. In FIG. 15B, one-dot chain lines indicate boundaries of the cycle.

In FIG. 15A, a first half part is denoted by reference numerals C11A to C41A, and a second half part are denoted by reference numerals C12A to C42A.

In FIG. 15A, the post-dispensing cleaning E2 is performed twice (post-dispensing cleaning E21 and E22) in the second half part of the chart C4 (reference numeral C42A) .

Since FIG. 15A shows a case where the first cleaning is performed, the intermediate cleaning E1 is performed, whereas the intermediate cleaning E1 is not performed in the case of the second cleaning.

In FIG. 15B, the timing chart for the dispensing operation is divided into three cycles. A first cycle is indicated by reference numerals C11B to C41B, a second cycle is indicated by reference numerals C12B to C42B, and a third cycle is indicated by reference numerals C13B to C43B. The boundary of each cycle is indicated by a one-dot chain line. An execution time of each cycle is the same.

In the example shown in FIG. 15B, the intermediate cleaning E11 is performed in the first cycle (see the reference numeral C41B). Then, in the second cycle, post-dispensing cleaning E23 (E2) is performed (see the reference numeral C42B). Further, in the third cycle, post-dispensing cleaning E24 (E2) is performed (see the reference numeral C43B) .

When the large amount dispensing of the sample P is performed, a large amount of the sample P generally adhere to the inside and outside of the sample probe 122 even after the dispensing is completed. As shown in FIGS. 15A and 15B, by performing the post-dispensing cleaning E2 a plurality of times or performing one cleaning for a long time, the cleaning effect on the sample probe 122 can be enhanced even when the large amount dispensing is performed.

In the example shown in FIG. 15B, the intermediate cleaning E11 and the post-dispensing cleaning E23 and E24 are performed at the same timing in each cycle. That is, a time Δt between the boundary (one-dot chain line) of each cycle and a completion time point of each of the intermediate cleaning E11 and the post-dispensing cleaning E23 and E24 is the same, and a time T during which each of the intermediate cleaning E11 and the post-dispensing cleaning E23 and E24 is performed is the same. In other words, in each cycle, the start time point and the completion time point of each of the intermediate cleaning E11 and the post-dispensing cleaning E23 and E24 are the same. In this way, the variation in the water pressure of the cleaning water W can be reduced as described above.

In the third cycle in FIG. 15B, for example, the post-dispensing cleaning E2 may be added between the post-dispensing cleaning E23 in the second cycle and the post-dispensing cleaning E24. In general, as the post-dispensing cleaning E2 is performed more frequently, carry-over of the sample P can be reduced.

As shown in FIGS. 15A and 15B, a method of dividing by the large amount dispensing is the same as the method performed in FIG. 14A. That is, as shown in FIGS. 15A and 15B, after the sample probe 122 aspirates the sample in the first cycle, the cycle may be divided at a position where the cleaning of the intermediate cleaning E11 is performed. In the subsequent cycles, the ejection to the reaction vessel 131 and the cleaning of the inner side and the outer side of the sample probe 122 (post-dispensing cleaning E2) may be performed.

Although not shown in FIGS. 15A and 15B, in the post-dispensing cleaning E2, outer cleaning of the sample probe 122 is performed, and inner cleaning in which the inner side of the sample probe 122 is cleaned is also performed (the same applies to the post-dispensing cleaning E2 in other drawings).

In measurement items affected by the unstable components U, it is desirable that calibration and control measurement are performed using the operation of the intermediate cleaning E1 or the intermediate cleaning E11 described in the present embodiment. Since the sample adhering to the outside of the sample probe 122 is removed by cleaning, even if an amount of the removed sample is corrected and ejected to the reaction vessel 131, some error may occur, and therefore, it is desirable to dispense the sample by using the same operation sequence.

In the present embodiment, although the cleaning pump 174 and the cleaning water pump (not shown) are provided, these may be used as a common pump. Even if a common pump is used, the same effect can be obtained.

### [Sixth Embodiment: Switching Between First Cleaning and Second Cleaning]

### <Controller 200>

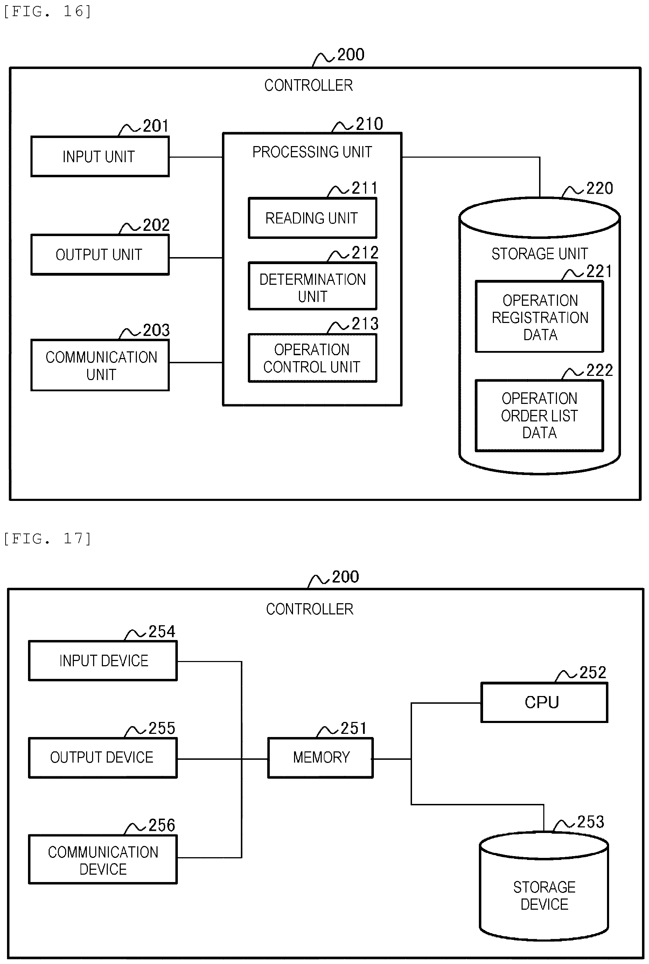

FIG. 16 is a functional block diagram of the controller 200 according to the present embodiment.

The controller 200 includes a processing unit 210, a storage unit 220, an input unit 201, an output unit 202, and a communication unit 203.

The storage unit 220 includes operation registration data 221 and operation order list data 222.

The operation registration data 221 stores inspection items to be performed for each pharmaceutical product company.

The operation order list data 222 stores an execution order of the inspection items.

The operation registration data 221 and the operation order list data 222 will be described later.

The processing unit 210 includes a reading unit 211, a determination unit 212, and an operation control unit 213.

The reading unit 211 reads data (operation data) of an inspection item to be performed next from the operation order list data 222.

The determination unit 212 determines which of the first cleaning and the second cleaning is to be performed.

The operation control unit 213 controls operations of the sample dispensing unit 121, the reaction vessel cleaning unit 171, the sample syringe 123, and the like.

The input unit 201 is a keyboard, a mouse, or the like, and the output unit 202 is a display or the like. The communication unit 203 transmits and receives information to and from each unit of the automatic analysis device 100, such as the sample dispensing unit 121, the reaction vessel cleaning unit 171, and the sample syringe 123.

FIG. 17 is a diagram showing a hardware configuration of the controller 200 according to the present embodiment.

The controller 200 includes a memory 251, a central processing unit (CPU) 252, a storage device 253, an input device 254, an output device 255, and a communication device 256.

The storage device 253 is a hard disk (HD) or the like, and corresponds to the storage unit 220 in FIG. 16. The input device 254 corresponds to the input unit 201 in FIG. 16, the output device 255 corresponds to the output unit 202 in FIG. 16, and the communication device 256 corresponds to the communication unit 203 in FIG. 16.

A program stored in the storage device 253 is loaded into the memory 251. Then, the loaded program is executed by the CPU 252, whereby the respective units 210 to 213 in FIG. 16 are embodied.

### <Flowchart>

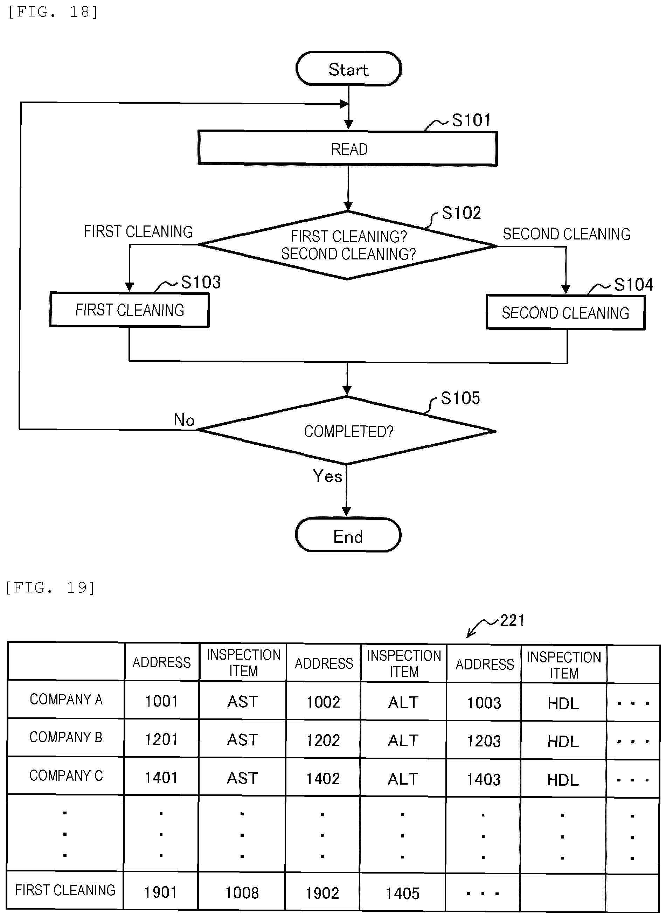

FIG. 18 is a flowchart showing a procedure of switching processing between the first cleaning and the second cleaning. As described above, the dispensing is continuously performed a plurality of times from one sample container 152 to the reaction vessel 131. The processing in FIG. 18 is assumed to be dispensing processing performed on one sample container 152.

First, the reading unit 211 reads first operation data from the operation order list data 222 (S101). The operation data will be described later.

Next, the determination unit 212 determines whether to perform the first cleaning or the second cleaning based on the operation data (S102).

When the first cleaning is performed (S102 → first cleaning), the operation control unit 213 performs the first cleaning (S103).

When the second cleaning is performed (S102 → second cleaning), the operation control unit 213 performs the second cleaning (S104).

When step S103 and step S104 are completed, the determination unit 212 determines whether all the inspections are completed (S105). Specifically, the determination unit 212 determines whether all pieces of operation data in the operation order list data 222 are completed.

When all the inspections are not completed (S105 → No), the processing unit 210 returns the processing to step S101 and reads the next operation data.

When all the inspections are completed (S105 → Yes), the processing unit 210 completes the dispensing processing for the sample P of the relevant sample container 152, and performs the dispensing processing for the sample P of the next sample container 152.

### <Operation Registration Data 221>

FIG. 19 is a diagram showing an example of the operation registration data 221 according to the sixth embodiment.

As shown in FIG. 19, an inspection item registration area may be determined for each reagent manufacturer in advance, and it may be determined whether the first cleaning is performed or the second cleaning is performed in the inspection item registration area. In the first cleaning, an inspection item registration area that can be used in common by each reagent manufacturer may be ensured in advance.

For example, in the operation registration data 221 shown in FIG. 19, an "address 1001" to an "address 1200" are inspection item registration areas of a "company A". An "address 1201" to an "address 1400" are inspection item registration areas of a "company B". In the example of FIG. 19, an "address 1901" to an "address 2101" are inspection item registration areas for the first cleaning.

An inspection item is associated with each address in an operation (reagent) allocation range. For example, "AST" inspection is stored in the "address 1001" for the "company A". Similarly, "ALT" inspection is stored in the "address 1002". Hereinafter, the inspection items are also associated with the addresses of "company B" and "company C" in the same manner.

In the inspection item registration area for the first cleaning, each address is associated with a common address in the "company A", "company B", and "company C". This means that the first cleaning is performed for the inspection item corresponding to the address stored in the inspection item registration area for the first cleaning. For example, the "address 1008" is stored in the "address 1901". Here, in the inspection of the "company A" stored in the "address 1008", the first cleaning is performed ("Items affected by unstable components U"). The same applies to the "address 1902" and subsequent addresses.

It is also possible to register an inspection item in an "address 1008A" in the "address 1901" as a new item. For example, in the example of the company A, the inspection item to be registered is registered in the "address 1005", and an "address 1005A" is registered in the inspection item registration area for the first cleaning. Here, the "address 1005" and the "address 1005A" indicate inspection items using the same reagent. Then, it is assumed that the "address 1005A" is set before the "address 1005" as an inspection order. In this case, the inspection items are inspection items using the same reagent, and the inspection, in which the second cleaning is performed, is performed after the inspection, in which the first cleaning is performed, is performed (may be performed in a reverse order) . By doing so, it is possible to perform the operation of the first cleaning and the operation of the second cleaning for the same inspection item in the same sample. That is, in the inspection using the reagent of the same inspection item, the first cleaning and the second cleaning can be performed. Such an operation setting may be generally used, or may be used for reagent development in a reagent manufacturer. It is considered that it can contribute to the reagent development by being used for the reagent development in the reagent manufacturer.

Here, the "item" is an inspection item such as "ALT" or "HDL".

Depending on an inspection content, the unstable components U may not affect the inspection. In such a case, the intermediate cleaning E1 is not necessary. Therefore, as shown in the sixth embodiment, when the unstable components U do not affect the inspection, the intermediate cleaning E1 is not performed (second cleaning), and when the unstable components U affect the inspection, the intermediate cleaning E1 is performed (first cleaning). In this way, it is not necessary to perform unnecessary intermediate cleaning E1, so that inspection efficiency can be improved and consumption of the cleaning water W can be prevented.

In this way, by setting the operation registration data 221 in advance, the controller 200 can distinguish between an inspection item requiring the first cleaning and an inspection item not requiring the first cleaning. The dispensing operation may be performed in the first cleaning only when the inspection item requiring the first cleaning is executed.

### <Operation Order List Data 222>

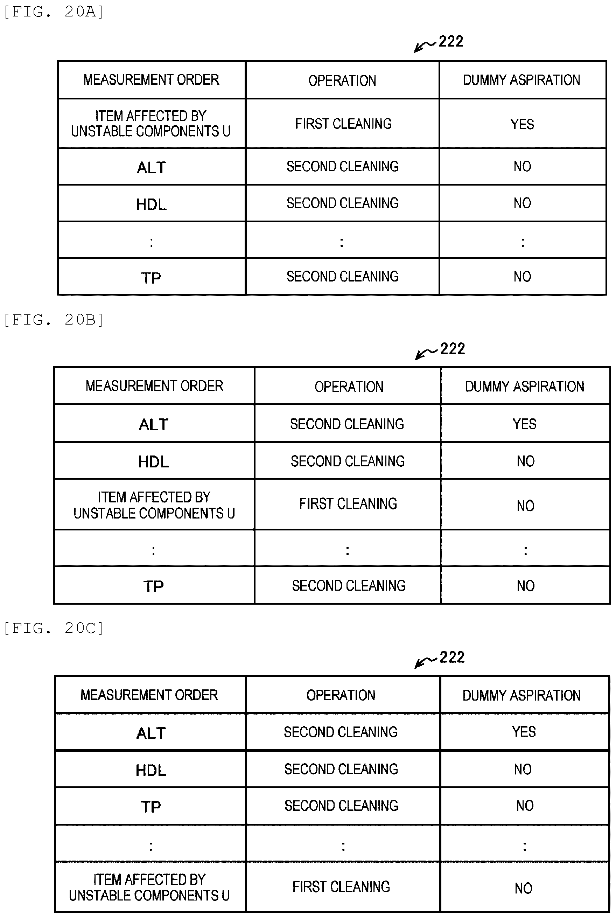

FIGS. 20A to 20C are diagrams showing examples of the operation order list data 222 according to the sixth embodiment.

In FIGS. 20A to 20C, one operation order list data 222 indicates an inspection using a pharmaceutical product from one pharmaceutical company (equivalent to the "company A", the "company B", the "company C", and so on in FIG. 19). Here, it is assumed that all pieces of operation order list data 222 in FIGS. 20A to 20C are inspections using the pharmaceutical product of "company A".

In the operation order list data 222 shown in FIGS. 20A to 20C, orders of the inspection items to be executed are stored. For example, in the example shown in FIG. 20A, the inspection is performed in the order of "item affected by unstable components U" → "ALT" → "HDL" → "TP". The same applies to FIGS. 20B and 20C.

The determination unit 212 of the controller 200 searches the operation registration data 221 in FIG. 19 using operation data as a key, and determines whether to perform the first cleaning (step S102 in FIG. 18). The operation data is one record in the operation order list data 222 shown in FIGS. 20A to 20C.

For example, in FIG. 20A, the reagent of the "company A" is used as described above, and the first inspection item is the "item affected by the unstable components U", so that the first cleaning is performed in this inspection according to the operation registration data 221 in FIG. 19. In other inspections, the second cleaning is performed.

In FIGS. 20A to 20C, inspection item names are stored in a column of the inspection item, whereas the address in FIG. 19 may be stored.

Here, an order in which the first cleaning is performed is first in a series of inspections in the example of FIG. 20A, third in the example of FIG. 20B, and last in the example of FIG. 20C.

As described above, since the unstable components U adhere to the outside of the sample probe 122 and are taken out, when the aspiration of the sample P from the sample container 152 is repeated, the unstable components U decrease from an upper layer of the sample P.

That is, the inspection item affected by the unstable components is more likely to be affected in the first inspection, and the influence tends to decrease as the second half inspection. In short, mixing of the unstable components U in the first cleaning decreases in the order of FIG. 20A → FIG. 20B → FIG. 20C.

Therefore, by performing the first cleaning last as shown in FIG. 20C, it is possible to reduce a risk of mixing of the unstable components U into the sample ejected into the reaction vessel 131.

Here, an inspection item requiring the first cleaning and an inspection item not requiring the first cleaning are set in advance in a form of the operation registration data 221. However, the invention is not limited thereto, and a method of checking only the inspection item requiring the first cleaning may be used in an analysis parameter screen (not shown) for setting the inspection item.

Dummy aspiration in FIGS. 20A to 20C is an aspiration operation as follows. As described above, the sample probe 122 is filled with the system water. A plurality of inspections are continuously performed on the sample P of one sample container 152. That is, the sample P is continuously dispensed from one sample container 152 to the plurality of reaction vessels 131. In such a case, it is desirable that the sample P is not completely ejected from the sample probe 122, and a small amount of the sample P remains in the sample probe 122 after the ejection. Accordingly, it is possible to prevent the sample P from being diluted by the system water in the sample probe 122. That is, it is desirable that the sample P is additionally aspirated (dummy aspirated) only at the time of initial aspiration.

In the sample probe cleaning unit 110, a drying mechanism that dries the sample probe 122 may be provided.

In the present embodiment, although the sample probe 122 is rotationally moved, the sample probe 122 may be linearly moved or curvedly moved.

In the present embodiment, the operation registration data 221 and the operation order list data 222 are stored in the storage unit 220 of the controller 200. However, the invention is not limited thereto, and at least one of the operation registration data 221 and the operation order list data 222 may be stored outside the controller 200 such as a cloud. In this case, the controller 200 acquires necessary data from the outside of the controller 200.

The invention is not limited to the embodiments described above, and includes various modifications. For example, the above embodiments have been described in detail for easy understanding of the invention, and the invention is not necessarily limited to those having all the configurations described above. A part of a configuration according to one embodiment can be replaced with a configuration according to another embodiment, and a configuration according to the embodiments can be added to a configuration of another embodiment. In addition, a part of the configurations of each embodiment may be added, deleted, or replaced with other configurations.

In addition, a part or all of the configurations, functions, the units 210 to 213, the storage unit 220, and the like described above may be implemented by hardware by, for example, designing by an integrated circuit. As shown in FIG. 17, the above-described configurations, functions, and the like may be implemented by a processor such as the CPU 252 with software through interpreting and executing a program for implementing the functions. Information of programs, tables, files, and the like for implementing each function can be stored in, in addition to the HD, a recording device such as the memory 251 or a solid state drive (SSD), or a recording medium such as an integrated circuit (IC) card, a secure digital (SD) card, or a digital versatile disc (DVD).

In each embodiment, control lines and information lines, considered to be necessary for description, are shown, and not all the control lines and information lines are necessarily shown in the product. Actually, it may be considered that almost all the configurations are connected to one another.

### Reference Signs List

1 automatic analysis system
100 automatic analysis device (automatic analysis unit)
110, 110A, 110B sample probe cleaning unit (cleaning unit)
121 sample dispensing unit (probe moving unit)
122 sample probe (probe unit)
131 reaction vessel
152 sample container
200 controller (control unit, control device)
211 reading unit (acquisition unit)
213 operation control unit (cleaning control unit)
221 operation registration data (including information on first inspection and second inspection)
222 operation order list data (including information on first inspection and second inspection)
El, E11 intermediate cleaning (11-th cleaning)
E2, E21 to E24 post-dispensing cleaning (12-th cleaning)
S101 read (acquisition step)
S103 first cleaning (first cleaning step)
S104 second cleaning (second cleaning step)
v1 rotational movement speed (first movement speed)
v2 rotational movement speed (second movement speed)
W cleaning water (cleaning liquid)

## Claims

1. An automatic analysis system comprising:
an automatic analysis unit including
a probe unit configured to perform aspiration and ejection of a sample,
a probe moving unit configured to move the probe unit at least from a position of a sample container in which the sample is stored to a position of a reaction vessel into which the sample is dispensed, and
a cleaning unit configured to perform first cleaning in which a cleaning liquid is ejected to a periphery of the probe unit between the aspiration of the sample from the sample container and the ejection of the sample to the reaction vessel; and
a control unit configured to control ejection and stop of the cleaning liquid in the first cleaning in a predetermined inspection item.

2. The automatic analysis system according to claim 1, wherein
the control unit is configured to
cause, when an inspection performed by the automatic analysis unit is a first inspection which is a specific inspection, the cleaning unit to perform the first cleaning, and
cause, when an inspection performed by the automatic analysis unit is a second inspection which is an inspection other than the first inspection, the cleaning unit to perform second cleaning in which the cleaning liquid is not ejected to the outside of the probe unit between the aspiration of the sample from the sample container and the ejection of the sample to the reaction vessel.

3. The automatic analysis system according to claim 2, wherein
the control unit is configured to
perform the first cleaning after all the second cleaning is performed.

4. The automatic analysis system according to claim 1, wherein
the control unit is configured to
perform, in the first cleaning, cleaning of the probe unit after movement of the probe unit is stopped.

5. The automatic analysis system according to claim 4, wherein
the cleaning unit is configured to
eject the cleaning liquid from a lower side to an upper side, and
the control unit is configured to
perform, in the first cleaning, the ejection of the cleaning liquid before the probe unit reaches a position of the cleaning unit.

6. The automatic analysis system according to claim 1, wherein
the control unit is configured to
perform, in the first cleaning, cleaning of the probe unit without stopping movement of the probe unit.

7. The automatic analysis system according to claim 6, wherein
after starting the movement of the probe unit at a first movement speed which is a predetermined movement speed, the control unit is configured to set a movement speed of the probe unit to a second movement speed lower than the first movement speed before the cleaning of the probe unit is performed.

8. The automatic analysis system according to claim 1, wherein
the control unit is configured to adjust an aspiration time of the sample in the probe unit in accordance with an inspection performed by the automatic analysis unit, and
the shorter the aspiration time is, the longer the time for cleaning performed in the first cleaning is.

9. The automatic analysis system according to claim 1, wherein
in the first cleaning, the control unit is configured to perform 11-th cleaning of ejecting the cleaning liquid to the periphery of the probe unit and 12-th cleaning of ejecting the cleaning liquid to the periphery of the probe unit after the ejection of the sample to the reaction vessel is completed between the aspiration of the sample from the sample container and the ejection of the sample to the reaction vessel,
the first cleaning is divided into a plurality of cycles, and
the 11-th cleaning and the 12-th cleaning are performed in different cycles.

10. The automatic analysis system according to claim 9, wherein
the 11-th cleaning and the 12-th cleaning are executed at the same timing in the cycles in which each of the 11-th cleaning and the 12-th cleaning is executed.

11. A control device in an automatic analysis system, the automatic analysis system including
an automatic analysis device including
a probe unit configured to perform aspiration and ejection of a sample,
a probe moving unit configured to move the probe unit at least from a position of a sample container in which the sample is stored to a position of a reaction vessel into which the sample is dispensed, and
a cleaning unit configured to eject a cleaning liquid, and
a control device configured to control ejection and stop of the cleaning liquid in a predetermined inspection item,
the control device in the automatic analysis system comprising:
an acquisition unit configured to acquire information related to an inspection performed by the automatic analysis device; and
a cleaning control unit configured to cause, when the inspection performed by the automatic analysis device is a first inspection which is a specific inspection, the cleaning unit to perform first cleaning in which the cleaning liquid is ejected to a periphery of the probe unit between the aspiration of the sample from the sample container and the ejection of the sample to the reaction vessel, and to cause, when the inspection performed by the automatic analysis device is a second inspection which is an inspection other than the first inspection, the cleaning unit to perform second cleaning in which the cleaning liquid is not ejected to the outside of the probe unit between the aspiration of the sample from the sample container and the ejection of the sample to the reaction vessel.

12. A cleaning method executed by a control device provided in an automatic analysis system,
the automatic analysis system including
an automatic analysis device including
a probe unit configured to perform aspiration and ejection of a sample,
a probe moving unit configured to move the probe unit at least from a position of a sample container in which the sample is stored to a position of a reaction vessel into which the sample is dispensed, and
a cleaning unit configured to eject a cleaning liquid, and
a control device configured to control ejection and stop of the cleaning liquid in a predetermined inspection item,
the cleaning method executed by the control device comprising:
an acquisition step of acquiring information related to an inspection performed by the automatic analysis device;
a first cleaning step of causing, when the inspection performed by the automatic analysis device is a first inspection which is a specific inspection, the cleaning unit to perform first cleaning in which the cleaning liquid is ejected to a periphery of the probe unit between the aspiration of the sample from the sample container and the ejection of the sample to the reaction vessel; and
a second cleaning step of causing, when the inspection performed by the automatic analysis device is a second inspection which is an inspection other than the first inspection, the cleaning unit to perform second cleaning in which the cleaning liquid is not ejected to the outside of the probe unit between the aspiration of the sample from the sample container and the ejection of the sample to the reaction vessel.
